Europäisches Patentamt

European Patent Office

Office européen des brevets

(19)

(11) **EP 0 774 735 B1**

(12) **FASCICULE DE BREVET EUROPEEN**

(45) Date de publication et mention
de la délivrance du brevet:
**07.05.2003 Bulletin 2003/19**

(51) Int Cl.[7]: **G06T 7/00**

(21) Numéro de dépôt: **96402470.7**

(22) Date de dépôt: **18.11.1996**

(54) **Procédé de structuration d'une scène au sens du mouvement apparent et de la profondeur**

Szenenstrukturierung nach der scheinbaren Bewegungsrichtung und der Tiefe

Scene structuring method according to depth and direction of apparent movement

(84) Etats contractants désignés:
**DE ES GB IT**

(30) Priorité: **20.11.1995 FR 9513721**

(43) Date de publication de la demande:
**21.05.1997 Bulletin 1997/21**

(73) Titulaire: **COMMISSARIAT A L'ENERGIE
ATOMIQUE
75015 Paris (FR)**

(72) Inventeurs:
• **Hennebert, Christine
38000 Grenoble (FR)**
• **Rebuffel, Véronique
38700 La Tronche (FR)**

(74) Mandataire: **Poulin, Gérard et al
BREVALEX
3, rue du docteur Lancereaux
75008 Paris (FR)**

(56) Documents cités:
**WO-A-92/17983          US-A- 5 257 209**

• **INTELLIGENT ROBOTS AND COMPUTER
VISION X: NEURAL, BIOLOGICAL AND 3-D
METHODS, BOSTON, MA, USA, 14-15 NOV. 1991,
vol. 1608, ISSN 0277-786X, PROCEEDINGS OF
THE SPIE - THE INTERNATIONAL SOCIETY FOR
OPTICAL ENGINEERING, 1992, USA, pages
35-47, XP000577618 SHIEH J ET AL: "Fusion
based depth estimation from a sequence of
monocular images"**

• **INTELLIGENT ROBOTS AND COMPUTER
VISION XIII: 3D VISION, PRODUCT INSPECTION,
AND ACTIVE VISION, BOSTON, MA, USA, 2-4
NOV. 1994, vol. 2345, ISSN 0277-786X,
PROCEEDINGS OF THE SPIE - THE
INTERNATIONAL SOCIETY FOR OPTICAL
ENGINEERING, 1994, SPIE-INT. SOC. OPT. ENG,
USA, pages 357-368, XP000577628
TAALEBINEZHAAD M A ET AL: "Depth map from
a sequence of two monocular images"**

• **IEICE TRANSACTIONS ON INFORMATION AND
SYSTEMS, APRIL 1993, JAPAN, vol. E76-D, no.
4, ISSN 0916-8532, pages 446-453, XP000378253
MORIKAWA H ET AL: "Incremental
segmentation of moving pictures-an analysis by
synthesis approach"**

• **IEICE TRANSACTIONS ON INFORMATION AND
SYSTEMS, JUNE 1994, JAPAN, vol. E77-D, no. 6,
ISSN 0916-8532, pages 694-704, XP000468524
HSIAO-JING CHEN ET AL: "Segmentation based
on accumulative observation of apparent motion
in long image sequences"**

• **PROCEEDINGS. 1991 IEEE INTERNATIONAL
CONFERENCE ON ROBOTICS AND
AUTOMATION (CAT. NO.91CH2969-4),
SACRAMENTO, CA, USA, 9-11 APRIL 1991, ISBN
0-8186-2163-X, 1991, LOS ALAMITOS, CA, USA,
IEEE COMPUT. SOC. PRESS, USA, pages
2730-2737 vol.3, XP000577212 SINGH A:
"Robust computation of image-motion and
scene-depth"**

**Description**

Domaine technique

L'invention concerne un procédé de structuration d'une scène observée avec une caméra mobile au sens du mouvement apparent et de la profondeur.

Etat de la technique antérieure

L'imagerie monoculaire à caméra mobile est souvent employée en surveillance de scène. Le capteur peut être embarqué dans un véhicule quelconque, monté sur une tourelle panoramique ou encore manipulé par un opérateur. Généralement, la scène observée est quelconque et comporte plusieurs éléments situés à des distances de la caméra différentes (ou profondeurs différentes).

L'analyse et l'interprétation des contenus statique et dynamique d'une scène à partir d'une séquence d'images (suite d'images indexée par le temps) acquise à l'aide d'un capteur mobile s'avère particulièrement difficile lorsque la fonction de profondeur de la scène présente des discontinuités et que le capteur est animé d'un mouvement de translation dominant significatif.

Lorsque le mouvement dominant de la caméra est une rotation ou lorsque la scène peut être modélisée par une fonction de profondeur continue (la scène ne comporte alors qu'un seul plan comme c'est la cas pour les vues aériennes), le champ des déplacements dans l'image, hors les objets mobiles de la scène, peut être modélisé globalement par un modèle paramétrique 2D (deux dimensions) du champ des vitesses. Dans ce cas, une méthode décrite dans la référence [3] vise à estimer le mouvement apparent de la caméra dans l'image hors objets mobiles, à compenser ce mouvement estimé, puis à détecter les objets mobiles petits et lents se déplaçant dans la scène.

En revanche, lorsque la caméra est animée d'un mouvement de translation dominant et que la scène est composée de plusieurs plans se situant à des profondeurs différentes, une segmentation (découpage de l'image 2D en zones) au sens du mouvement apparent est nécessaire pour structurer la scène et analyser le contenu statique de l'image. En effet, dans ce cas, un objet statique dans la scène et situé proche de la caméra (au premier plan) se déplace dans l'image beaucoup plus vite qu'un autre objet, lui aussi statique dans la scène, mais situé à une distance éloignée de la caméra (en arrière plan). Ainsi, les discontinuités de la fonction de profondeur dans la scène 3D créent des discontinuités apparentes dans le champ des vecteurs vitesse 2D. Dans l'image, le champ des vecteurs vitesse 2D correspond à l'ensemble des vecteurs vitesse représentant le déplacement de chaque point d'une image à sa suivante.

On cherche donc à extraire les différents plans composant la scène, c'est-à-dire les différentes couches situées à des profondeurs ou distances de la caméra différentes, à partir des informations présentes dans l'image. Le mouvement de la caméra n'est pas calibré et les paramètres du déplacement de la caméra sont inconnus. Les différents objets mobiles présents dans la scène, supposés de petite taille et de mouvement apparent lent, doivent restés inclus dans des régions de plus grande taille de façon à faciliter leur détection ultérieure.

Plusieurs méthodes reposant sur des hypothèses diverses ont été développées dans le but de segmenter une séquence d'images au sens du mouvement apparent. Un certain nombre d'entre elles sont basées sur le suivi d'objets mobiles préalablement détectés. Elles ont généralement été conçues pour détecter des objets mobiles de grande taille dont les mouvements apparents sont nettement différents, et pour évaluer leur trajectoire au cours du temps (voir références [4] et [5]).

Une autre classe d'approches consiste à estimer le mouvement apparent dans l'image à l'aide d'un modèle global affine du mouvement apparent 2D. Lors de l'étape de détection, tous les objets dont le mouvement n'est pas conforme avec le mouvement dominant estimé, sont détectés comme étant mobiles. Or, ces objets peuvent effectivement être mobiles, mais ils peuvent aussi faire partie de l'environnement statique s'ils sont situés à une profondeur différente de celle qui a prévalu dans l'estimation du mouvement dominant (voir référence [7]).

Dans la référence [6], une méthode de segmentation visant à extraire de façon exhaustive toutes les régions dont le mouvement apparent diffère, est présentée. Les régions correspondant à l'environnement statique sont extraites au même titre que les régions correspondant à des objets mobiles. Aussi, une fois la scène ainsi segmentée, il est difficile avec les techniques actuelles d'interpréter son contenu statique et dynamique, c'est-à-dire de faire la distinction entre les éléments statiques de là scène et les objets mobiles. De plus, à l'aide de cette méthode, deux régions de même mouvement apparent qui ne sont pas adjacentes dans l'image sont considérées comme étant différentes. Cela revient à dire que deux objets statiques de la scène 3D situés exactement à la même distance de la caméra, donc appartenant au même plan en terme de profondeur, et n'étant pas adjacents dans l'image 2D forment deux régions distinctes alors qu'ils correspondent à une même région en terme de mouvement apparent. Les résultats obtenus à l'aide de cet algorithme ne permettent pas de détecter ultérieurement de petits objets mobiles inclus dans des régions de plus grande taille correspondant à des éléments statiques de la scène.

La méthode décrite dans la référence [2] présente les mêmes inconvénients compte tenu des contraintes propres à notre contexte. De plus, elle a tendance à sursegmenter, soit à générer de petites zones généralement dues au bruit.

Dans la référence [9] on utilise la notion de région. Le but des auteurs est de décomposer la scène en couches, chaque couche correspondant à un plan situé à une distance donnée de la caméra. Malheureusement, cette méthode ne s'applique qu'à des séquences d'images sans objets mobiles. La présence d'un objet mobile dans la scène perturbe l'algorithme d'extraction des couches. Les résultats obtenus sont alors imprécis. De plus, cette méthode fonctionne bien lorsque la scène est proche de la caméra et donc que les mouvements apparents des différentes couches sont nettement différents. Pour un mouvement lent du capteur ou pour l'analyse d'une scène éloignée, les résultats obtenus sont beaucoup plus médiocres.

Les procédés de l'art antérieur traitent essentiellement des mouvements très différents soit parce que la vitesse apparente des différents plans est très différente, soit parce que. le type de mouvement apparent est très différent. Certains utilisent un modèle 2D pour déterminer le mouvement apparent et essaient d'obtenir le maximum de précision sur les paramètres du mouvement (voir référence [8]).

Dans certains procédés de l'art antérieur (voir référence [2]), on a les étapes suivantes :

- séquence d'image ;
- initialisation ;
- prédiction ;
- régularisation ;
- image segmentée.

L'invention a pour objet de permettre de distinguer des plans qui se situent à des distances différentes du capteur et dont les mouvements apparents dans l'image sont très peu différents. L'invention permet de traiter aussi bien les régions où l'information spatiale et temporelle est absente que les régions où cette information est présente, en tenant compte de leurs caractéristiques respectives.

Exposé de l'invention

L'invention concerne une étape préliminaire d'un procédé de détection d'un objet de petite taille apparente se déplaçant à une faible vitesse apparente. Il se caractérise en ce que l'on utilise un procédé multimodèle comportant deux niveaux de modèles, le premier niveau de modèle concernant l'agglomération locale des pixels, le second l'agglomération globale des pixels assemblés en régions et que l'on traite différemment les zones de l'image homogènes en niveau de gris et les zones texturées en niveau de gris.

Plus précisément, l'invention concerne un procédé apte à distinguer dans une séquence d'images, plusieurs plans dont les déplacements apparents peuvent être très peu différents, caractérisé en ce qu'il comporte les étapes suivantes :

I) Initialisation du procédé par obtention d'une première image résultat à partir de l'analyse d'un gradient d'intensité spatio-temporel calculé entre un instant t=1 et un instant t=2 et d'un modèle de champ de vitesse.

II) Initialisation d'une étape **III)** qui consiste en un procédé d'obtention à l'instant t d'une partition prédite de l'instant t+1 la plus proche possible de ce qu'on suppose obtenir à l'instant t+1. Cette partition construite de t+1, à partir de t, sert à initialiser l'étape **III)** et comprend les phases suivantes :

- calcul des paramètres du mouvement de chaque région à partir de l'image de partition à l'instant t et de l'image à l'instant t-1 par un procédé d'estimation du champ des vitesses ;
- reconstruction du champ des vitesses (vitesse pour chaque pixel) à l'instant t ;
- application du champ des vitesses à l'image de partition à l'instant t pour obtenir une partition de t+1 ; cette image sert ensuite à initialiser le processus d'agglomération locale à l'instant t (1ère phase de l'étape **III)**).

III) Distinction des plans de mouvements apparents différents à partir de deux images consécutives en fonction des images résultats précédemment obtenues en réalisant les phases suivantes :

- agglomération locale réalisée par un procédé itératif de régularisation qui permet d'attribuer à chaque pixel de l'image à l'instant t une étiquette de région en fonction des caractéristiques (par exemple le déplacement apparent, le gradient d'intensité calculé en fonction du niveau de gris) du pixel analysé et des étiquettes de ses voisins ;
- agglomération globale (par exemple régularisation, procédés utilisés en morphologie) réalisée par regroupement des pixels étiquetés en zones connexes cohérentes spatialement et temporellement, le résultat de l'agglomération globale étant la distinction des différents plans à l'instant t ;

- obtention à l'instant t d'une distinction entre les plans lorsque l'agglomération locale et l'agglomération globale ont convergé.

**IV)** Pour les instants suivants, réitération des étapes **II)** et **III)**.

Dans des modes avantageux de réalisation de l'invention :

**Concernant l'étape I)**

On utilise à cette étape **I)** des opérateurs morphologiques pour affiner le contour des régions, comme des opérateurs de type érosion/dilatation après la phase i suivante.

Avantageusement l'étape **I)** prend en compte les deux premières images de la séquence et comporte les phases suivantes :

**a)** extraction des régions homogènes en niveaux de gris ;
**b)** étiquetage des pixels composant les régions homogènes en niveau de gris ;
**c)** Estimation des paramètres d'un mouvement dominant en utilisant les pixels non encore étiquetés à l'aide d'un procédé d'estimation ;
**d)** extraction de l'ensemble des pixels répondant aux paramètres de la phase précédente ;
**e)** étiquetage des pixels de cet ensemble ;
**f)** bouclage à la phase c) jusqu'à ce que les paramètres du mouvement estimé ne correspondent plus à un mouvement dominant ;
**g)** analyse de l'histogramme des vitesses des pixels non encore étiquetés, chaque mode ou pic de l'histogramme correspond à une nouvelle région et les pixels constituant ces nouvelles régions se trouvent affectés d'une étiquette ;
**h)** obtention d'une partition correspondant à l'ensemble de étiquettes ;
**i)** localisation des ensembles de pixels de même étiquette formant des zones connexes inférieures à une taille prédéfinie ;
**j)** étiquetage de ces zones connexes de l'étiquette de la région qui les entoure ;
**k)** obtention de la première image résultat à l'instant t=1.

**Concernant l'étape II)**

Avantageusement on utilise un procédé multimodèle pour réaliser cette étape **II)**.

**Concernant l'étape III)**

L'agglomération locale traite une seule image à l'instant t et comprend les phases suivantes :

**a)** calcul des paramètres du mouvement pour chaque région sur l'image de partition servant à initialiser l'instant t ;
**b)** calcul des gradients d'intensité spatiaux et temporels sur l'image de l'instant t et l'image de partition de l'instant t-1 ;
**c)** construction des termes de la fonction d'énergie en utilisant les informations obtenues aux étapes **III-a)** et **III-b)** et, par un procédé de régularisation, application de la fonction d'énergie à l'image qui sert à initialiser l'instant t puis aux images obtenues après chaque itération jusqu'à convergence du procédé de régularisation, le but étant de minimiser la fonction d'énergie globale calculée sur toute l'image à l'instant courant t.

La fonction d'énergie est construite pour favoriser le choix de l'étiquette qui semble le mieux convenir à chaque pixel en fonction des caractéristiques du pixel déterminées à partir des paramètres du mouvement et des gradients d'intensité, et des étiquettes des pixels voisins du pixel considéré.

L'agglomération globale peut comprendre :

- l'élimination des zones inférieures à une taille préalablement définie (une zone étant définie comme un regroupement de pixels ayant la même étiquette et solidaires les uns des autres) ;
- le regroupement des zones de pixels dont les paramètres de mouvement sont proches de façon à constituer une seule région de même étiquette à l'instant t ;

- la création de nouvelles régions si nécessaire.

Dans un mode particulier de l'invention, on peut utiliser le formalisme des champs de Markov pour réaliser la phase d'agglomération locale (dans ce cas on travaille sur l'espace des images) et/ou pour faire la phase de l'agglomération globale (dans ce cas, on travaille sur l'espace des paramètres du mouvement).

Avantageusement l'obtention de la première image se déroule en deux étapes :

- la première consiste à extraire les régions peu denses en information et les régions correspondant à des surfaces planes dont le mouvement apparent correspond exactement aux paramètres estimés du mouvement dominant ;
- la deuxième étape consiste à extraire les plans suffisamment texturés situés à des profondeurs différentes, cette étape débutant lorsqu'aucun mouvement dominant ne peut plus être extrait dans la partie de l'image restant à analyser.

Dans une première façon de procéder la première étape consiste à extraire les régions uniformes en intensité, ces régions étant composées d'un ensemble de pixels pour lesquels les gradients spatiaux et temporels sont nuls pour au moins 95 % des points présents dans leur voisinage, une étiquette étant affectée à ces régions. Les régions, dont le mouvement apparent correspond au modèle de mouvement estimé à partir des pixels non étiquetés et à étiqueter, sont alors extraites et affectées d'une étiquette qui leur est propre.

Lorsqu'aucun mouvement dominant ne peut plus être extrait, la seconde étape débute, celle-ci ayant pour but de distinguer les régions correspondant aux différents plans constituant la scène.

Dans une seconde façon de procéder, la méthode d'obtention de la première partition comporte une étape préliminaire qui consiste à estimer le champ des vitesses.

Dans l'invention on traite des mouvements de translation latérale, ou des mouvements combinant un mouvement de translation latérale et un mouvement approchant mais pas de mouvement approchant seul (nécessité d'un mouvement latéral).

Le procédé multimodèle qui regroupe l'enchaînement des étapes agglomération locale et agglomération globale associé au formalisme markovien, n'a jamais été utilisée pour partitionner une séquence d'images au sens du mouvement et de la profondeur.

L'étape de prédiction est nécessaire lorsque le déplacement apparent des régions est supérieur à deux pixels entre deux images consécutives. Lorsque le déplacement apparent n'est que d'un pixel, on peut s'en affranchir. Si les différentes régions n'ont pas le même déplacement apparent, on peut choisir de faire la prédiction que pour les régions concernées ou pour toutes les régions.

Par rapport aux procédés de l'art connu, l'invention présentée réunit les avantages suivants :

- le procédé de l'invention permet d'isoler les différents plans correspondant à des objets statiques de la scène. Les petits objets mobiles dans la scène restent inclus dans des régions de taille plus importante. Ainsi, grâce à ce procédé, on est capable d'extraire et d'interpréter le contenu statique d'une scène tout en s'affranchissant du contenu dynamique correspondant aux petits objets mobiles. Cela est nécessaire pour faciliter leur détection par la suite ;
- l'utilisation d'une approche multimodèle permet de cumuler à la fois les avantages d'une analyse locale de l'image (au niveau de chaque point ou pixel), et d'une analyse globale (au niveau des régions). Ce formalisme a été introduit dans la référence [1] mais n'a pas été appliqué à l'analyse du mouvement ;
- à chaque niveau de modèle, on peut utiliser le formalisme des champs de Markov bien adapté pour combiner des informations de différents types. Chaque modèle markovien est spécifique et est construit pour répondre précisément à ce problème.

Le procédé de l'invention présente l'avantage de pouvoir appréhender des mouvements très lents de la caméra, ce qui n'est pas le cas des autres approches citées dans l'état de la technique. Toutes les régions dont le mouvement apparent est semblable portent la même étiquette, même si ces régions ne sont pas adjacentes dans l'image. Les partitions résultats obtenues ne sont pas sursegmentées. Les petites régions correspondant souvent à du bruit ou à la présence d'un petit objet mobile dans la scène ont été éliminées et sont incluses dans des régions de mouvement apparent homogène et de taille plus importante. Cela facilite l'interprétation ultérieure de la scène. Le procédé de l'invention n'est pas perturbé par la présence de mouvements parasites créés par des objets mobiles dans la scène. Le procédé de l'invention présente aussi l'avantage de traiter de façon différente les régions exemptes d'information spatiale (c'est-à-dire que les gradients spatiaux de la fonction d'intensité sont nuls pour au moins 95 % des points composant ces régions) et les régions où l'information est présente. Or ces deux types de régions présentent des caractéristiques distinctes qu'il peut être nécessaire d'exploiter.

L'invention concerne le domaine de surveillance en général à partir d'un capteur embarqué ou manipulé par un opérateur. Pour donner un aperçu de sa diversité, voici quelques exemples d'applications industrielles possibles :

- surveillance d'un terrain donné à partir d'un véhicule ;
- surveillance d'un secteur aérien ;
- surveillance d'un territoire à partir d'un avion ou d'un hélicoptère volant à base altitude ;
- surveillance d'un aéroport civil ;
- surveillance d'une zone sensible ;
- ...

Brève description des dessins

- La figure 1 illustre le synoptique général du procédé de l'invention ;
- la figure 2 illustre la construction d'une carte des vitesses initiale ;
- les figures 3A et 3B illustrent un exemple de formation d'une pile avec un espace de paramètres à deux dimensions ;
- la figure 4(A), (B) et (C) illustre des images de la séquence initiale aux instants t=1, t=2, t=10 ; la figure 4(D), (E) et (F) illustre les cartes des segments, chaque région étant représentée par un niveau de gris ; la figure 4(G), (H) et (I) illustre les contours des régions superposées aux images initiales ;
- la figure 5(A), (B) et (C) illustre des images de la séquence initiale aux instants t=1, t=2 et t=10 ; la figure 5(D), (E) et (F) illustre les cartes des segments, chaque région étant représentée par un niveau de gris ; la figure 5(G), (H) et (I) illustre les contours des régions superposés aux images initiales ;
- la figure 6 illustre le schéma général d'un dispositif de mise en oeuvre du procédé de l'invention.

Exposé détaillé de modes de réalisation

L'invention propose un procédé d'extraction des différents plans composant une scène, c'est-à-dire des différentes couches situées à une distance d'une caméra donnée.

L'objectif final de l'invention est de détecter des objets mobiles petits et lents se déplaçant devant les différents plans d'une scène 3D (trois dimensions).

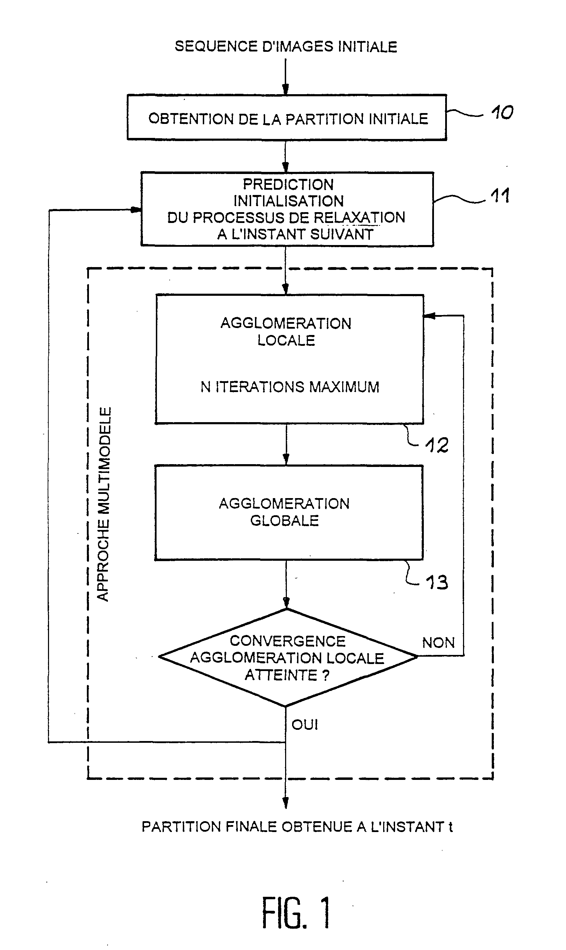

Le procédé de l'invention se décompose en plusieurs étapes illustrées dans la figure 1 :

Dans une première étape 10, une partition initiale est obtenue à partir des deux premières images de la séquence en entrée du procédé. Cette partition est nécessaire pour initialiser une troisième et une quatrième étapes 12 et 13 qui utilisent un processus de régularisation de type markovien.

La seconde étape 11 consiste en une prédiction. Elle utilise les résultats obtenus à l'instant t pour initialiser le processus de régularisation à l'instant t+1 et améliorer ainsi la convergence.

La troisième étape 12 est formée du premier niveau de modèle de l'approche multimodèle, appelé agglomération locale. Lors de cette étape, chaque pixel de l'image se voit attribuer une étiquette qui correspond au numéro de la région à laquelle il semble appartenir.

La quatrième étape 13 est formée du second niveau de modèle appelé "agglomération globale". Cette étape permet de regrouper les points de même étiquette en régions, de fusionner les régions dont le mouvement apparent est proche et de créer une nouvelle région si cela s'avère nécessaire.

La possibilité de distinguer deux plans situés à des profondeurs différentes dépend à la fois de la vitesse de la caméra et de la profondeur effective de chacun des plans. Par exemple, si on considère le cas d'une caméra équipée d'une focale usuelle et embarquée dans un véhicule se déplaçant à 30 km/h, le déplacement apparent d'un point appartenant à un objet situé à une distance de 50 mètres est de 6,7 pixels/image. Pour un objet situé à 100 mètres le déplacement apparent est de 33 pixels par image. Il est de 0,33 pixels/image pour un objet situé à 1000 mètres et de 0,16 pixel/image pour un objet situé à 2 000 mètres.

Cet exemple illustre le problème que se propose de résoudre l'invention. Il est aisé de distinguer deux plans de profondeur différente lorsque ceux-ci sont proches de la caméra. En revanche, cette tâche s'avère beaucoup plus délicate lorsque les plans sont éloignés du système de prise de vue et espacés de 1 000 mètres et ont un déplacement apparent qui diffère de moins de 0,2 pixel/image. Ils sont donc beaucoup plus difficiles à distinguer.

Or l'application qui est intéressante relève plutôt du cas le plus délicat : on a pour objectif de détecter des objets mobiles à la fois petits et lents dans un environnement texturé.

Généralement, lorsque la taille apparente d'un objet est petite et que sa vitesse apparente est faible, cet objet se situe loin de la caméra. Il est donc inclus dans un plan éloigné du système de prise de vue, qu'il faudra isoler à l'aide du procédé de l'invention. De plus, on souhaite pouvoir détecter des objets mobiles dont le déplacement apparent est inférieur à 0,5 pixel/image. Cela implique de concevoir un procédé de segmentation capable de distinguer deux plans dont les déplacements apparents diffèrent de moins de 0,5 pixel/image.

On a choisi de décrire le champ des déplacements 2D de chaque région par un modèle polynomial affine 2D à six paramètres :

$$w_\theta(p) = \begin{pmatrix} u_\theta(p) \\ v_\theta(p) \end{pmatrix}^T = \begin{pmatrix} a_0 + a_1 x + a_2 y \\ a_3 + a_4 x + a_5 y \end{pmatrix}^T \qquad (1)$$

où $(u_\theta, v_\theta)$ désigne le vecteur vitesse, issu du modèle considéré, au point $(x,y)$ de l'image.

Comparé à un modèle quadratique, l'emploi du modèle affine se justifie par les aspects suivants :

- On suppose que la caméra est animée d'un mouvement de translation dominant, or les paramètres de translation sont décrits uniquement par les termes d'ordre 0 et d'ordre 1.
- Les régions analysées lors de la segmentation sont des parties de l'image de taille variable et pouvant être fragmentées en plusieurs zones. L'estimation des termes du second ordre sur de telles régions est très médiocre.

Obtention de la première partition (étape 10)

La première partition peut être obtenue de différentes façons.

La première partition obtenue sert à initialiser le processus de relaxation spatio-temporel basé sur les champs de Markov. Il est important que cette présegmentation soit effectuée de façon précise car le processus de relaxation convergera plus vite et ne restera pas bloqué dans des minima locaux (dans la mesure où l'algorithme de relaxation est déterministe).

L'obtention de la première image se déroule en deux étapes :

- la première consiste à extraire les régions peu denses en information (c'est-à-dire homogènes en niveaux de gris) et les régions correspondant à des surfaces planes dont le mouvement apparent correspond exactement aux paramètres estimés du mouvement dominant ;
- la deuxième étape consiste à extraire les plans suffisamment texturés situés à des profondeurs différentes. Cette étape débute lorsqu'aucun mouvement dominant ne peut plus être extrait dans la partie de l'image restant à analyser.

Des opérations morphologiques de type érosion/dilatation sont nécessaires pour affiner le contour des régions. Une analyse de connexité est utilisée pour localiser et éliminer les régions inférieures à une certaines taille et éviter ainsi une sursegmentation de la scène.

**Première façon de procéder**

• *Première étape*

Cette première étape consiste à extraire les régions uniformes en intensité. Ces régions sont composées d'un ensemble de pixels pour lesquels les gradients spatiaux sont nuls pour au moins 95 % des points présents dans leur voisinage. Une étiquette est affectée à ces régions. Ensuite, les régions dont le mouvement apparent correspond au modèle de mouvement estimé à partir des pixels non étiquetés et à étiqueter sont extraites et affectées d'une étiquette qui leur est propre.

• *Seconde étape*

Lorsqu'aucun mouvement dominant ne peut plus être extrait, la seconde étape débute. Elle a pour but de distinguer les régions correspondant aux différents plans (ou couches) constituant la scène.

Par exemple, on peut estimer grossièrement le vecteur du déplacement apparent de la caméra dans l'image. On calcule ensuite les vecteurs vitesses normaux aux contours en mouvement pour les pixels non encore étiquetés à l'aide de l'équation (1). Puis, on effectue en chaque pixel le produit scalaire entre le vecteur correspondant au déplacement apparent de la caméra et le vecteur vitesse normal calculé au point analysé. L'histogramme des vecteurs vitesses résultants est alors analysé de façon automatique. Les populations significatives (c'est-à-dire les ensembles de pixels qui forment un pic de l'histogramme) sont isolées. Elles correspondent chacune à une région à laquelle on affecte une nouvelle étiquette.

**Seconde façon de procéder**

*• Estimation robuste du champ des vitesses*

On a conçu le procédé d'estimation du champ des vitesses décrit ci-après en exploitant des parties intéressantes de différents travaux. Le champ des déplacements ainsi obtenu est d'une excellente précision car le procédé prend en compte les occlusions (partie d'un objet recouverte par un autre objet ou découverte au cours du mouvement) de façon à préserver les frontières de mouvement.

On a conçu un procédé d'estimation du mouvement apparent utilisant les équations dites de diffusion en s'inspirant notamment des articles référencés [10] et [11]. Ce procédé répond aux spécifications suivantes :

- l'équation de contrainte du mouvement apparent (équation (2)) est exprimée sous forme différentielle avec une contrainte de lissage pour régulariser la solution ;
- l'information sur les discontinuités est associée de façon non linéaire au problème d'estimation du mouvement apparent pour reconstruire le champ des vitesses avec précision tout en préservant les discontinuités ;
- une initialisation peu bruitée reposant sur une analyse multirésolution des différents mouvements apparents présents, permet d'améliorer la robustesse et la précision de l'estimation.

L'équation de contrainte du mouvement apparent (équation (2)) n'est valide que dans des situations bien précises réunissant les conditions qui suivent (voir document référencé [12]) :

- il n'y a pas de variation de la luminance entre deux instants consécutifs ;
- le bruit dans l'image est peu important ;
- le déplacement apparent est très lent ;
- le contraste entre deux pixels consécutifs est faible.

$$I_x.u + I_y.v + I_t = 0 \qquad (2)$$

où $(I_x, I_y, I_t)$ représentent les dérivées spatiales et temporelle de la fonction intensité.

Or localement, très peu de pixels répondent à la fois à toutes ces conditions, ce qui biaise le calcul de la vitesse normale utilisée pour initialiser le processus itératif d'estimation du mouvement apparent.

En tenant compte de ces observations, on a développé un procédé visant à mieux initialiser le processus de régularisation qui conduit à l'obtention d'une carte dense des vitesses avec prise en compte des discontinuités.

Pour cela, on réalise une pyramide gaussienne à plusieurs niveaux de résolution spatiale pour les instants t-1 et t. A chaque niveau de résolution, on recherche les points pour lesquelles l'équation de contrainte du mouvement apparent (équation (2)) est valide. En ces points, le plan formé par les gradients représentés par $I_x$ et $I_y$ à l'instant t-1 est parallèle au plan formé par ces même gradients à l'instant t. Cela revient à dire que les dérivés de la fonction intensité selon x, y, et t doivent être linéaires. Il est aussi nécessaire que le gradient spatial ne soit pas trop élevé et que les deux plans ne soient pas trop éloignés dans le temps. En pratique, ces deux plans ne sont jamais parfaitement parallèles. On peut ainsi affecter un coefficient de confiance relatif à la validité de l'équation (2) en certains points qui vérifient les critères que nous venons de définir, et rejeter les autres points qui conduisent à des mesures aberrantes.

Ensuite, on calcule la vitesse normale à l'aide de l'équation (2) en chaque point où cette équation est valide et à tous les niveaux de résolution de la pyramide. En fonction des caractéristiques locales des pixels et de leur amplitude de déplacement, l'équation (2) peut s'avérer valide à certains niveaux de résolution mais pas à d'autres. Une fois cette tâche effectuée, il faut réaliser la fusion des informations obtenues aux différentes résolutions spatiales. Chaque carte de vitesse apparentes est projetée au niveau de résolution initiale (le plus fin) où une fusion des informations provenant des diverses cartes est réalisée. Si l'équation (2) est valide à plusieurs niveaux de résolution spatiale, une combinaison linéaire des vitesse normales estimées à chaque niveau est retenue. En revanche, pour de nombreux points, l'équation (2) ne s'est révélée valide à aucun niveau et aucune mesure initiale ne peut être retenue.

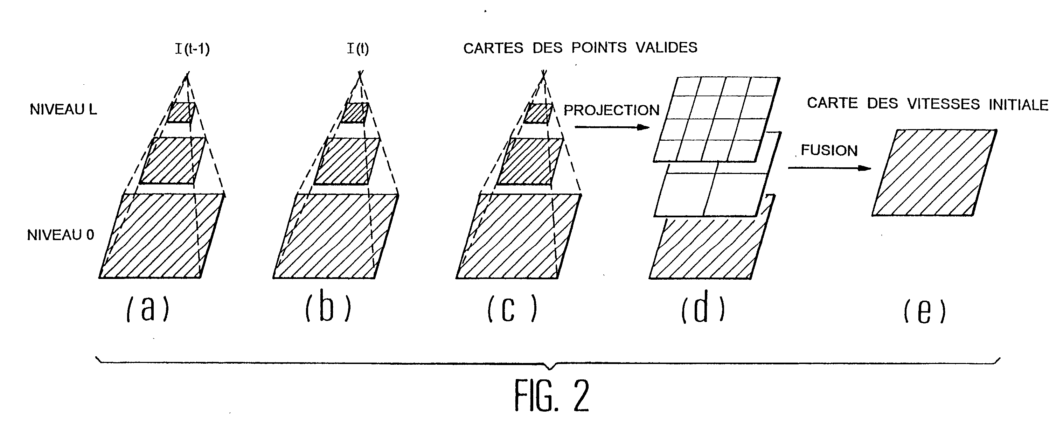

Ainsi, on obtient une carte initiale des vitesses normales en certains points pour lesquels l'estimation peut être réalisée avec précision. Cette carte sert à initialiser le processus de régularisation décrit dans la référence [11] et rappelé dans l'annexe située en fin de description. La carte finale du champ des déplacements est obtenue une fois le processus de régularisation terminé. Un schéma décrivant l'obtention de la carte des vitesses initiales est présenté sur la figure 2, sur laquelle on a :

- la construction (en (a) et (b))d'une pyramide spatiale aux instants I(t-1) et I(t) ;
- la recherche, en (c), des points valides à chaque niveau de résolution, calcul de

$$v_N^L = \frac{-I_t}{\sqrt{I_x^2 + I_y^2}}$$

en ces points ;
- la projection, en (d), des vecteurs vitesses calculés au niveau de résolution initial

$$v_N^0 = 2^L * v_N^L ;$$

- la fusion, en (e), ou combinaison linéaire des cartes obtenues aux différents niveaux de résolution.

Le champ des déplacements (ou des vitesses) obtenu à l'aide de ce procédé sera exploité lors des diverses étapes du procédé de structuration d'une scène. L'estimation de ce champ est effectué pour chaque couple d'images successives de la séquence.

• *Première étape*

La première région correspond aux zones homogènes en niveaux de gris comme un ciel sans nuage ou une mer calme par exemple. Ces zones se caractérisent par le fait que les gradients spatiaux sont nuls dans le voisinage de chaque point analysé. Une étiquette est affectée aux sites constituant cette région exempte d'information permettant de calculer ses paramètres du mouvement apparent.

Ensuite, les paramètres du mouvement apparent 2D, soit $a_0$, ...$a_5$, sont estimés à l'aide d'un estimateur robuste à partir des pixels de l'image non encore étiquetés. Si un mouvement apparent dominant peut être extrait, la région, dont le mouvement peut être décrit à l'aide des paramètres précédemment estimés, est isolée et les pixels qui la composent sont affectés d'une nouvelle étiquette. De façon à isoler cette région, on calcule sur un voisinage V de chaque point p le résidu :

$$\varepsilon^2(p) = \sum_{q \in v(p)} \left( u_{\hat{\theta}}(q) - u(q) \right)^2 + \left( v_{\hat{\theta}}(q) - v(q) \right)^2 \qquad (3)$$

où $\hat{\theta}$ représente le vecteur de paramètres estimés précédemment,

$$\left( u_{\hat{\theta}}(p), v_{\hat{\theta}}(p) \right)$$

le vecteur vitesse au point p construit à l'aide des paramètres du modèle 2D (deux dimensions) estimés, et

$$\left( u(p), v(p) \right)$$

le vecteur vitesse calculé localement à l'aide du procédé exposé dans la partie "estimation robuste du champ des vitesses".

Le résidu $\varepsilon^2$ doit être faible pour les pixels constituant la région dont le mouvement est conforme avec les paramètres du modèle estimé. En revanche, $\varepsilon^2$ est élevé en tous les autres pixels éliminés du processus d'estimation par l'estimateur robuste. Ainsi, s'il existe une région dont le mouvement est conforme avec le modèle estimé, il existe une population de pixels significative sur l'histogramme de $\varepsilon^2$ qui forme un "mode" (ou pic) de l'histogramme et dont la valeur est très faible (proche de 0). Une analyse automatique de l'histogramme de $\varepsilon^2$ permet d'extraire tous les pixels constituant cette région et de leur affecter une étiquette nouvelle.

Ce processus d'estimation des paramètres d'un modèle affine deux dimensions est itéré sur tous les pixels de l'image non pourvus d'une étiquette jusqu'à ce qu'aucun mouvement apparent dominant ne puisse plus être extrait. La seconde étape commence alors.

· *Seconde étape*

Cette étape vise à structurer les pixels non encore étiquetés en régions de mouvements apparents différents, sachant que le mouvement d'aucune de ces régions ne domine sur les autres.

Pour cela, on analyse l'histogramme de u(p) formé à partir des pixels dépourvus d'étiquette. Une analyse automatique de l'histogramme permet d'en extraire les "modes" (ou pics) s'ils existent. Une étiquette différente est alors affectée aux regroupements de pixels constituant chacun des pics et formant une région. Pour chaque région ainsi isolée, on effectue le même traitement pour la composante v(p). Si l'histogramme de v(p) comporte plusieurs pics distincts, la région récemment étiquetée se trouve subdivisée en autant de régions distinctes que de pics. Une étiquette différente est affectée à chacune de ces sous-régions.

Le nombre initial de régions peut désormais être déterminé. C'est la somme du nombre de régions extraites à la première étape et à la seconde étape.

Des opérateurs morphologiques d'érosion et de dilatation conditionnelles sont ensuite appliqués aux régions ainsi obtenues. Un opérateur d'amincissement de contours est aussi employé pour supprimer les zones ou les parties de zones très étroites (typiquement entre 1 et 3 pixels d'épaisseur ou de largeur). Une analyse de connexité est effectuée de façon à éliminer les zones de trop petite taille.

L'agglomération locale (étape 12)

L'agglomération locale constitue le premier niveau de modèle de l'approche multimodèle. Elle est effectuée pour chaque instant t (excepté l'instant initial) de la séquence d'images à partir de la carte des régions prédite.

L'agglomération locale consiste à attribuer à chaque pixel une étiquette de région (celle qui semble la plus adéquate) en fonction des caractéristiques du site (le pixel analysé) et des étiquettes de ses voisins. Le traitement se fait localement, au niveau du pixel et d'un petit voisinage qui l'entoure. Tous les pixels, pour lesquels il existe une étiquette différente de la leur dans leur voisinage, sont visités et leur étiquette est mise à jour.

Le formalisme utilisé à cette étape s'appuie sur la modélisation markovienne. L'espace dans lequel on travaille est l'image. Un site correspond à un pixel et le voisinage considéré est un 8-voisinage. Seules les cliques à deux sites sont prises en compte pour construire la fonction d'énergie. Une clique est un ensemble de sites mutuellement voisins et comprenant le site analysé.

Les notations utilisées sont les suivantes : $R_i$ correspond à la région étiquetée $r_i$. R est l'ensemble des régions et r le nombre de régions à l'instant courant t. Le vecteur des paramètres du mouvement 2D estimés pour la région $R_i$ est représenté par :

$$\theta_i = (a_0^{(i)} a_1^{(i)} a_2^{(i)} a_3^{(i)} a_4^{(i)} a_5^{(i)})$$

$\theta$ regroupe l'ensemble des vecteurs $\theta_i : \theta = \{\theta_i\}$.

La matrice :

$$B(p) = \begin{pmatrix} 1 & x & y & 0 & 0 & 0 \\ 0 & 0 & 0 & 1 & x & y \end{pmatrix}^{\mathsf{T}}$$

est définie en chaque point p(x,y) de l'image. Le vecteur vitesse au point p(x,y) est noté $w_{\theta i}(p)$. On a :

$$\theta_i . B(p) = \vec{w}_{\theta i}(p) = \begin{pmatrix} a_0^{(i)} + a_1^{(i)}x + a_2^{(i)}y \\ a_3^{(i)} + a_4^{(i)}x + a_5^{(i)}y \end{pmatrix}$$

L'ensemble de sites est noté S : s ∈ S.e(s) correspond à l'étiquette du site s et prend ses valeurs dans {r$_i$}. On a :

$$R_i = \cup\{s \in S/e(s)=r_i\}$$

θ$_{e(s)}$ représente le vecteur des paramètres du mouvement correspondant à la région définie par l'étiquette e(s).
Les observations o(s) sont constituées des gradients spatio-temporels de la fonction intensité (I$_x$,I$_y$,I$_t$) calculés localement en chaque pixel s.

**Calcul des paramètres du mouvement**

Les paramètres du mouvement de chaque région sont calculés à l'aide de l'estimateur robuste de la référence [8]. On utilise un modèle affine 2D du champ des vitesses à six paramètres (vecteur θ$_i$). Le calcul est mené en monorésolution. En effet, il serait délicat d'obtenir une bonne estimation des paramètres du mouvement pour les régions de petite taille et pour les régions de forme disparate à l'aide d'un processus d'estimation multirésolution. Pour ces régions le nombre de pixels aux niveaux de résolution grossiers est trop faible pour permettre une estimation correcte des paramètres du mouvement.
On a donc préféré mener le calcul des paramètres du mouvement pour chaque région en monorésolution, mais en partant d'une bonne initialisation des paramètres. Pour obtenir une initialisation convenable, on calcule en chaque point la vitesse normale avec la même technique que celle exposée lors de l'obtention de la première partition. Cela permet de calculer pour chaque région R$_i$ le vecteur vitesse normal moyen :

$$\overline{w}_n{}^{(i)} = \begin{pmatrix} \overline{u}_n{}^{(i)} \\ \overline{v}_n{}^{(i)} \end{pmatrix}$$

Les paramètres à estimer sont alors initialisés de la façon suivante :

$$\theta_i^{init} = (\overline{u}_n{}^{(i)} 0 0 \overline{v}_n{}^{(i)} 0 0)$$

Tous les pixels de la région R$_i$ analysée contribuent à estimer les paramètres du mouvement en minimisant la fonction d'énergie

$$E^2 = \int_{p \in R_i} \frac{1}{2} bj[\theta_i.B(p).\overset{\wedge}{\nabla}I(p)+I_t(p)]^2 \; dx \; dy$$

par la méthode des moindres carrés pondérés où les b$_j$ sont les poids de l'estimateur robuste.
Dans le cas où on utilise le second procédé d'obtention de la première partition en se servant du procédé d'estimation robuste du champ de vitesses on procède de la façon suivante :
Les paramètres du mouvement de chaque région sont calculés à l'aide d'un estimateur robuste en minimisant la fonction d'énergie suivante :

$$E^2 = \int_{p \in R_i} \frac{1}{2} b_j \left( \left( u_{\tilde{\theta}}(q) - u(q) \right)^2 + \left( v_{\tilde{\theta}}(q) - v(q) \right)^2 \right) dx \; dy \qquad (4)$$

où les b$_j$ sont les poids de l'estimateur robuste et (u,v) correspond au vecteur vitesse au point p extrait de la carte du champ des déplacements estimés à l'aide du procédé décrit précédemment ("estimation robuste du champ des déplacements").
On utilise un modèle affine 2D (deux dimensions) du champ des vitesses à six paramètres (vecteur θ$_i$). Le calcul est mené en monorésolution. En effet, il serait délicat d'obtenir une bonne estimation des paramètres du mouvement pour les régions de petite taille et pour les régions de forme disparate à l'aide d'un processus d'estimation multirésolution. Pour ces régions le nombre de pixels aux niveaux de résolution grossiers est trop faible pour permettre une estimation correcte des paramètres du mouvement.

Tous les pixels de la région $R_i$ analysée contribuent à l'estimation des paramètres du mouvement par moindres carrés pondérés.

**Fonction d'énergie**

La fonction d'énergie à minimiser est la suivante :

$$U(e,o,\theta)=\lambda U_1(e,o,\theta)+\gamma U_2(e,o)+\beta U_3(e) \qquad (5)$$

$U_1$ est le terme d'adéquation aux données :

$$U_1\big(e,o,\theta\big) = \sum_{s\in S} V_1\big(e,o,\theta\big) \qquad (6)$$

avec :

$$V_1\big(e,o,\theta\big) = \begin{cases} \sum_{s'\in S} \dfrac{\mid \theta_{e(s')}.B(s').\vec{\nabla}I(s')+I_t(s')\mid^2}{\Big(\big\|\vec{\nabla}I(s')\big\|^2\Big)} & si \; \big\|\vec{\nabla}I(s')\big\| < \mu \\ 0 & sin\, on \end{cases} \qquad (7)$$

$\mu$ est une constante positive qui fixe le seuil à partir duquel les gradients spatiaux et temporels ont une signification autre que le bruit. Généralement $\mu \leq 5$. V(s) est un voisinage du site s considéré.

$U_2$ assure la cohérence spatiale et temporelle des partitions obtenues :

$$U_2\big(e,o\big) = \sum_{c\in C;c=\{s_1,s_2\}} 1_{e(s_1)\neq e(s2)} V_s\big(e,o\big) + \sum_{c\in C;c=\{s'_1,s'_2\}} V_t\big(e,o\big) \qquad (8)$$

avec :

$$\psi(s_1,s_2)=|I_t(s_2)-I_t(s_1)| \qquad (9)$$

$$V_s\big(e,o\big) = \begin{cases} -1 & si \; \psi\big(s_1,s_2\big) > k \\ 0 & sin\, on \end{cases} \qquad (10)$$

$$V_t(e) = \begin{cases} -1 \ si \ \left|I(s_1,t) - I(s_1, t - \Delta t)\right| = \left|I(s'_1) - I(s'_2)\right| \le \sigma \\ \qquad et \ e(s_1) = e(s_2) \\ ou \ \left|I(s_1,t) - I(s_1, t - \Delta t)\right| = \left|I(s'_1) - I(s'_2)\right| > \sigma \\ \qquad et \ e(s_1) \ne e(s_2) \\ 0 \ sinon \end{cases} \qquad (11)$$

Le terme $V_s(e,o)$ a pour rôle :

- de favoriser le choix de deux étiquettes différentes sur les frontières des zones en mouvement où les gradients spatiaux de la luminance sont importants ;
- de gérer la cohérence des frontières entre la région exempte d'information spatiale et les autres régions.

En effet, une frontière en mouvement (discontinuité du mouvement entre deux régions) coïncide généralement avec un contour spatial d'intensité se déplaçant. En revanche, un contour spatial d'intensité se déplaçant ne correspond pas toujours à une frontière de mouvement. C'est pourquoi on favorise le choix de deux étiquettes identiques dans les zones homogènes en niveau de gris, et de deux étiquettes différentes aux niveaux des contours d'intensité importants.

Le terme $V_t(e,o)$ permet de faire apparaître les différences temporelles entre les images acquises aux instants t et t-$\Delta$t. En calculant le gradient sur un intervalle de $\Delta$t images on peut appréhender des mouvements apparents plus faibles qu'entre deux images consécutives (de l'ordre de 0,1 pixel/image pour $\Delta$t=7). Les zones dans lesquelles le gradient temporel de la fonction intensité est très faible, voire nul, correspondent aux régions homogènes en niveaux de gris ou aux régions "statiques" dans l'image. Les séquences d'images étant acquises à l'aide d'une caméra mobile, aucune région correspondant à une partie de l'environnement ne peut avoir un mouvement apparent totalement nul. Seuls les objets mobiles peuvent apparaître avec une vitesse nulle dans l'image, mais ils sont supposés de petite taille et ne doivent pas figurer dans la partition finale. Par l'intermédiaire de ce potentiel, on peut localiser les zones homogènes en niveaux de gris pour lesquelles les paramètres du mouvement apparent ne peuvent être calculés. Pour ces zones, le terme d'énergie U1 n'a aucune influence.

Le paramètre k correspond à l'écart type du bruit calculé sur toute l'image alors que le paramètre $\sigma$ représente l'écart type du bruit dans les zones homogènes en niveaux de gris. On a toujours $\sigma<k$.

$U_3$ est le terme d'énergie a priori :

$$U_3(e) = \sum_{c \in C; c = \{s_1, s_2\}} V_3(e) \qquad (12)$$

avec :

$$V_3(e) = \begin{cases} 1 \quad si \ e(s_1) \ne e(s_2) \\ 0 \quad sinon \end{cases} \qquad (13)$$

$U_3$ assure le lissage des bordures des régions de la partition obtenue.

Les paramètres $\lambda$, $\gamma$ et $\beta$ sont fixés expérimentalement aux valeurs :

$$\lambda=0,5 \quad \gamma=1,0 \quad \beta=0,01$$

$$\beta = 0,01$$

## Algorithme d'optimisation

On choisit de ne retenir comme étiquettes candidates à l'étiquetage du site s que les étiquettes présentes dans son voisinage. On calcule ensuite l'énergie locale correspondant à chaque étiquette candidate et on retient l'étiquette qui conduit à l'obtention de l'énergie locale la plus faible $U^l_{min}$.

Cette énergie $U^l_{min}$ est comparée à un seuil $\tau_r$ :

- si $U^l_{min} > \tau_r$ le pixel est affecté d'une étiquette temporaire $\rho$,
- sinon le pixel est affecté de l'étiquette $r_i$ qui conduit à obtenir $U^l_{min}$.

La valeur du seuil $\tau_r$ est obtenue de la façon suivante :

On calcule pour l'ensemble des régions $R_i$ l'énergie locale résiduelle $U^\ell_{res}$ en chaque point de l'image éliminé du processus d'estimation des paramètres du mouvement apparent des régions par l'estimateur robuste. On retient alors la valeur minimale de $U^l_{res}$ sur l'ensemble de ces points. Cette valeur minimale est alors choisie pour $\tau_r$.

## Vitesse de convergence

La vitesse de convergence dépend de la qualité de l'initialisation. Lorsque l'initialisation est très bonne et que le déplacement apparent des régions entre deux images consécutives est faible, très peu d'itérations suffisent pour converger. La convergence est supposée atteinte lorsque moins de dix sites sur toute l'image ont donné lieu à modification.

Si le processus n'a pas convergé avant N itérations, on passe à l'agglomération globale. Une fois l'agglomération globale terminée, on relance le processus d'agglomération locale pour au plus N itérations. Dès que le processus d'agglomération locale a convergé avant N itérations, on lance le processus d'agglomération globale une dernière fois et le traitement de l'instant t est terminé.

## L'agglomération globale (étape 13)

L'agglomération globale ne se place plus au niveau des pixels mais au niveau des régions elles-mêmes. Les pixels étiquetés sont regroupés en zones connexes cohérentes spatialement et temporellement.

Une zone connexe est un ensemble de pixels voisins portant la même étiquette. Une région est un ensemble de zones connexes dont les pixels portent la même étiquette. Une région peut donc être constituée de plusieurs zones connexes de même étiquette mais qui ne sont pas voisines dans l'espace "image". Ces zones sont homogènes au sens du mouvement apparent. Leurs paramètres du mouvement sont identiques.

L'agglomération globale a pour but :

- d'éliminer les zones dont la taille est trop petite (c'est-à-dire inférieure à la taille minimale que l'on s'est fixée). Une analyse de connexité permet d'effectuer rapidement cette tâche ;
- de fusionner les régions dont les paramètres du mouvement sont devenus très proches ;
- de créer une ou des nouvelles régions si cela s'avère nécessaire (gestion de l'étiquette temporaire $\rho$) .

On utilise également le formalisme Markovien. Un site, noté s, correspond désormais à une région $R_i$ étiquetée $r_i$ ou à l'union des zones connexes portant l'étiquette temporaire $\rho$ que l'on peut noter région $R_\rho$. Les paramètres du mouvement apparent $\theta_\rho$ sont estimés pour la région $R_\rho$, mais tant que ces paramètres ne sont pas analysés, aucune étiquette définitive n'est affectée à cette région qui conserve temporairement l'étiquette $\rho$.

Des notations complémentaires doivent être définies :

$\theta_s$ est le vecteur des paramètres du mouvement du site s, et S représente l'ensemble des sites s.

La notion de voisinage entre les sites considérés n'est pas définie comme l'adjacence topologique de deux régions dans l'image, mais comme la proximité de deux régions dans l'espace des paramètres du mouvement à six dimensions : $(a_0, a_1, a_2, a_3, a_4, a_5)$. Or l'objectif de l'invention n'est pas à strictement parler une segmentation, car des zones non adjacentes peuvent se voir affecter la même étiquette de région si elles appartiennent au même plan de profondeur dans la scène observée. Les régions ou sites sont ainsi les sommets d'un graphe dans lequel l'arc qui relie deux régions répond au critère suivant :

On définit un seuil $\delta$. Tous les sites qui se trouvent à une distance inférieure à $\delta$ d'un site donné $s_a$ et dont l'étiquette n'est pas temporaire (différente de $\rho$) sont des voisins de $s_a$. La distance utilisée permet d'accorder la même importance aux termes constants ($a_0,a_3$) qu'aux termes du premier ordre ($a_1,a_2,a_4,a_5$). Un site $s_b$ est donc voisin du site $s_a$ si et seulement si :

$$\|\theta_{s_a} - \theta_{s_b}\|^2 < \delta^2 \text{ et } e(s_b) \neq \rho \qquad (14)$$

On calcule ensuite pour chaque site s le nombre de voisins parmi les sites de type $R_i$ présents dans le voisinage. On construit une pile de la façon suivante :

Les sites sont classés dans la pile par ordre décroissant du nombre de voisins de type $R_i$. Le site qui a le plus de tels voisins est en haut de la pile. Les sites dont le nombre de voisins de ce type est nul ne figurent pas dans la pile.

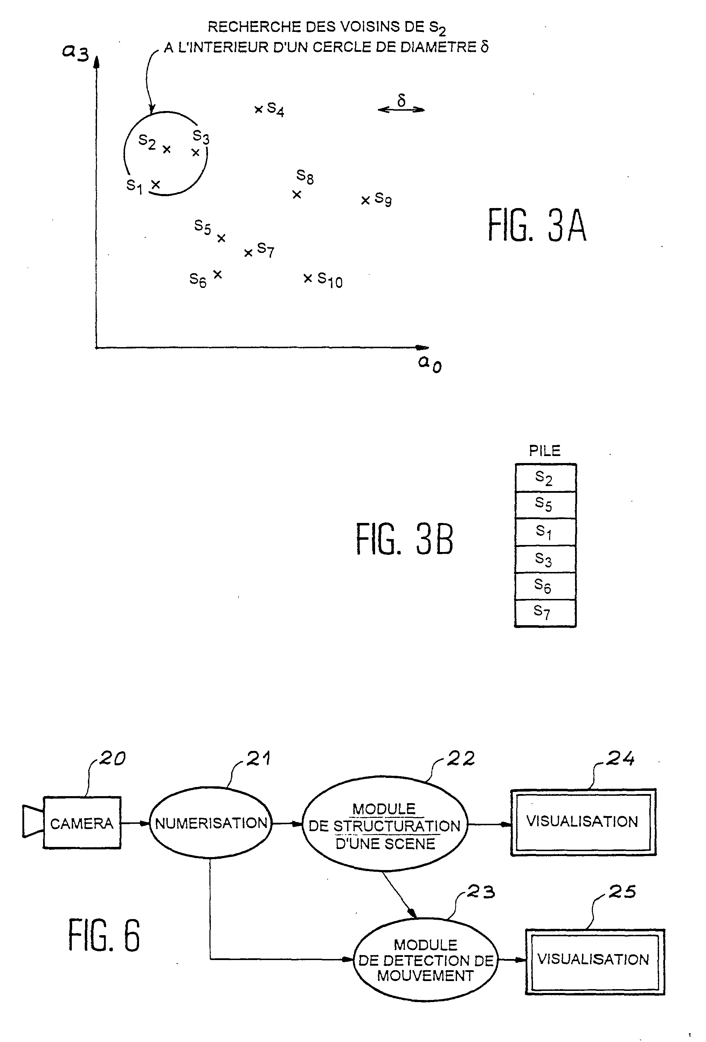

Sur la figure 3A on a :

0 voisin : S4, S8, S9, S10 ;
1 voisin : SI, S3,S6,S7 ;
2 voisins : S2, S5 ;

avec S5=$R_\rho$.

La pile est alors représentée sur la figure 3B.

**Algorithme d'optimisation et parcours des sites**

On traite le site qui se situe en haut de la pile. On ne prend en compte que les cliques à deux sites inclus dans le voisinage considéré. On évalue les paramètres du mouvement de l'union, notée $S_u$, du site candidat $s_2$ et du site analysé $s_1$. On recherche parmi les voisins de type $R_i$ celui qui minimise la fonction d'énergie décrite ci-après. L'étiquette de ce site est retenue et affectée au site analysé.

Ensuite on recalcule les paramètres du mouvement après toute modification des étiquettes et on met à jour la pile. On traite ensuite le site qui se situe au sommet de la pile. Ce processus est itéré jusqu'à ce que la pile soit vide. La convergence est alors obtenue.

**Fonction d'énergie**

La fonction d'énergie est construite de la façon suivante :

$$U(\theta, e) = \sum_{c \in C, c = \{s_1, s_2\}} 1_{e(s_1) \neq (s_2)} \frac{1}{\|\theta_{s_u} - \theta_{s_2}\|^2} \quad \text{avec } s_u = s_1 U s_2$$

$$(15)$$

où $s_1$ et $s_2$ forment une clique à deux sites et $\theta_{s_u}$ représente le vecteur des paramètres du mouvement de la région R étiquetée $r_i = e(s_i)$.

Cette fonction de compose d'un terme qui exprime l'adéquation entre le modèle paramétré du mouvement estimé de l'étiquette candidate et les paramètres du mouvement de la région voisine considérée dans la clique.

La fusion de deux . régions dont les paramètres du mouvement diffèrent d'une distance inférieure à $\delta$ est réalisée au cours de la relaxation. De plus, si les paramètres du mouvement de la région $R_\rho$ sont proches de ceux d'une région déjà existante, les deux régions sont fusionnées et $R_\rho$ prend l'étiquette de la région existante.

**Création de nouvelles régions**

Le fait de ne pas considérer les voisins de type $R_\rho$ lors de la construction de la pile a pour but d'éviter le propagation de l'étiquette temporaire $\rho$. Enfin, une fois la convergence atteinte, on analyse la carte des régions obtenue. Si la région $R_\rho$ n'a pas encore d'étiquette définitive, une nouvelle région est créée et une nouvelle étiquette lui est attribuée. Le nombre de régions r est enfin remis à jour.

Le procédé converge d'autant plus vite que le nombre de sites est réduit et que les sites sont éloignés. C'est généralement le cas car le nombre de sites est lié au nombre de régions. Or, le nombre de régions ne peut pas être extrêmement important car on cherche des régions de taille convenable pour éviter une sursegmentation de la scène.

C'est pourquoi on peut, sans coût de calcul notable, remettre à jour la pile définie précédemment lors de chaque modification de l'étiquette d'un site, alors que cela est inconcevable lorsqu'on travaille dans l'espace de l'image par exemple; car les temps de calculs deviennent alors excessivement longs.

La prédiction (étape 11)

La carte des régions obtenue à l'instant t est utilisée pour initialiser le procédé de segmentation à l'instant t+1. Pour cela, on suppose que le déplacement apparent des régions est régulier au moins sur une courte période temporelle (par exemple trois images consécutives).

Pour former la carte initiale de l'instant t+1, on décale chaque région d'un déplacement identique à celui qu'elles ont subi entre les instants t-1 et t.

Ce traitement permet au processus d'agglomération locale de converger rapidement et évite qu'il reste bloqué dans des minima locaux (car on a choisi un algorithme d'optimisation déterministe).

L'invention concerne donc un procédé apte à distinguer dans une séquence d'images plusieurs plans dont les déplacements apparents peuvent être très peu différents et apte à traiter les régions où l'information spatio-temporelle est absente aussi bien que celles où elle est présente, comportant les étapes suivantes :

**I)** Initialisation du procédé (étape 10) par obtention d'une première image résultat à partir de l'analyse d'un gradient d'intensité spatio-temporel calculé entre un instant t=1 et un instant t=2 et d'un modèle de champ des vitesses.

**II)** Initialisation (étape 11) d'une étape **III)** qui consiste en l'obtention à l'instant t d'une partition prédite de l'instant t+1 la plus proche possible de ce qu'on suppose obtenir à l'instant t+1. Cette partition construite de t+1, à partir de t, sert à initialiser l'étape **III)** et comprend les phases suivantes :

- calcul des paramètres du mouvement de chaque région à partir de l'image de partition à l'instant t et de l'image à l'instant t-1 via les gradients ;
- reconstruction du champ des vitesses (vitesse pour chaque pixel) à l'instant t ;
- application du champ des vitesses à l'image de partition à l'instant t pour obtenir une partition de t+1 ; cette image sert ensuite à initialiser le processus d'agglomération locale à l'instant t+1 qui devient alors l'instant courant t.

**III)** Distinction des plans de mouvements apparents différents à partir de deux images consécutives en fonction des images résultats précédemment obtenues en réalisant les phases suivantes :

- agglomération locale (étape 12) réalisée par une régularisation itérative consistant à attribuer pour chaque pixel de l'image à l'instant t une étiquette de région en fonction des caractéristiques (par exemple le déplacement apparent, le gradient d'intensité calculé en fonction du niveau de gris) du pixel analysé et des étiquettes de ses voisins ;
- agglomération globale (étape 13) (par exemple régularisation, procédés utilisés en morphologie) réalisée par regroupement des pixels étiquetés en zones connexes cohérentes spatialement et temporellement, le résultat de l'agglomération globale étant la distinction des différents plans à l'instant t ;
- obtention à l'instant t d'une distinction entre les plans lorsque l'agglomération locale et l'agglomération globale ont convergé.

**IV)** Pour les instants suivants réitération des étapes **II)** et **III)**.

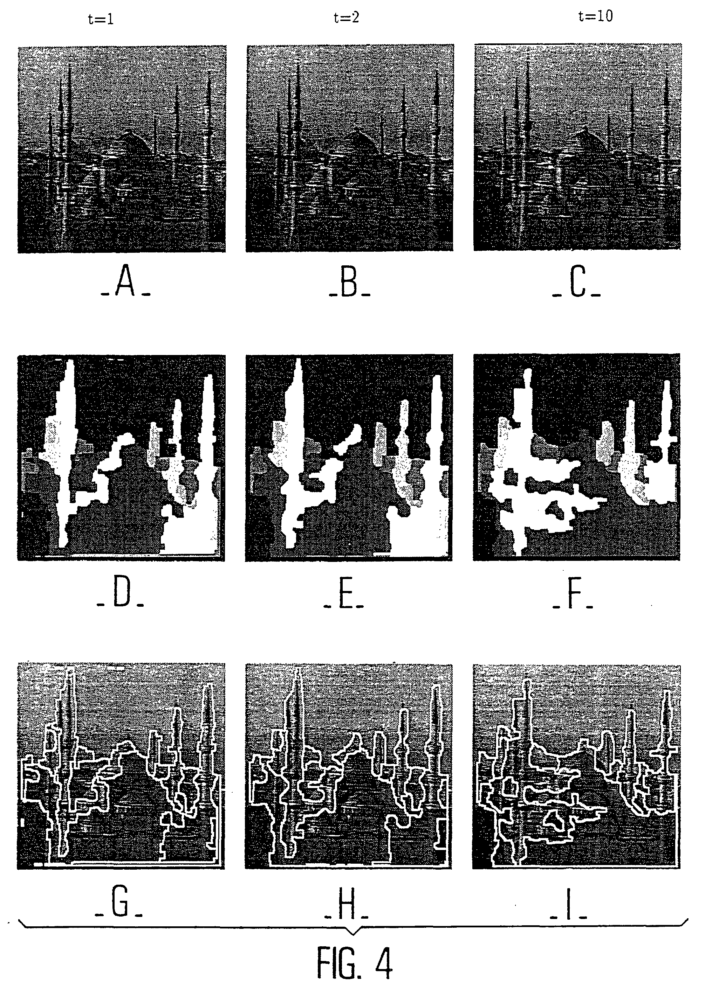

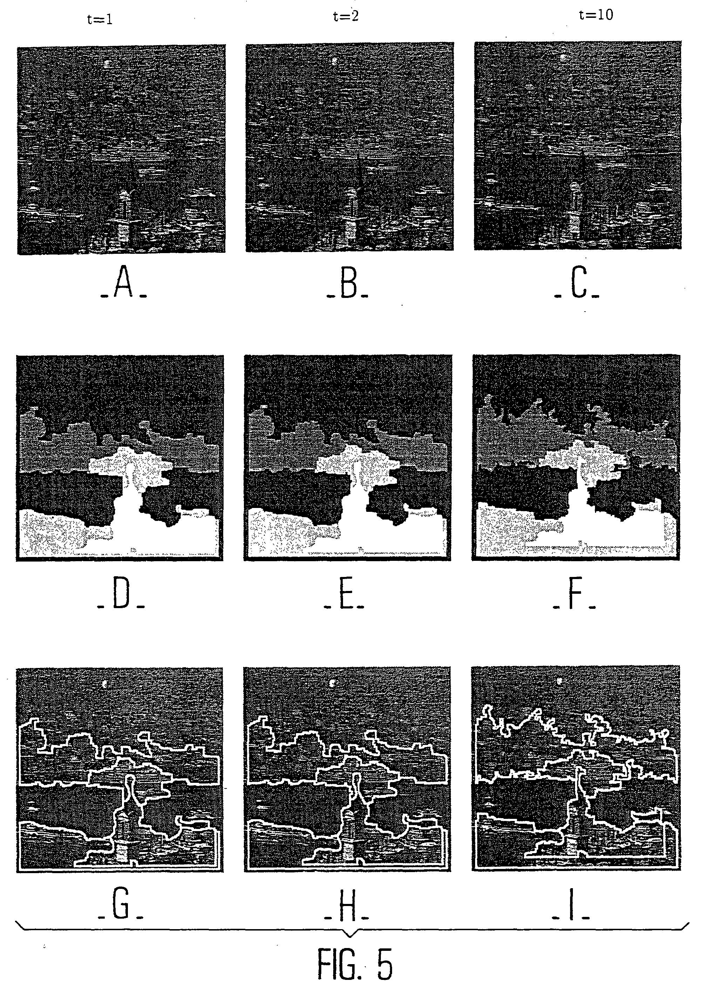

Deux exemples sont présentés ci-dessous pour illustrer les résultats du procédé de l'invention. Aux figures 4(A), (B) et (C) et 5(A), (B) et (C), trois instants t=1, t=2 et t=10 ont été extraits des séquences initiales et des séquences résultats de manière à pouvoir observer le comportement temporel de la segmentation. Le premier instant, traité différemment des autres permet d'obtenir une partition initiale de l'image qui sert ensuite à initialiser le processus de relaxation. A partir de l'instant t=2, toutes les partitions sont obtenues après une régularisation basée sur le formalisme markovien, comprenant deux étapes imbriquées : l'agglomération locale et l'agglomération globale.

Ces deux séquences ont été acquises à l'aide d'une caméra embarquée dans un hélicoptère volant à très basse altitude. Les éléments qui composent chaque scène se trouvent à plusieurs centaines de mètres de la caméra. Le mouvement dominant de la caméra est une translation perpendiculaire à l'axe de prise de vue. La composante de rotation est non nulle.

L'exemple de la figure 4 fait apparaître une ville composée de différents plans. Le premier plan qui inclut un clocher est bien marqué. Il est assez texturé et est représenté en blanc (figure 4(D), 4(E), 4(F)). Un deuxième plan se trouvant juste derrière peut aussi être extrait et est représenté en gris clair. La ville est coupée en deux parties par un bras de mer sur lequel naviguent des bateaux. Au loin, on peut donc distinguer une autre partie de la ville. Elle est très floue et peu contrastée. Elle forme à elle seule une région représentée en gris foncé. Les zones uniformes sont représentées avec une étiquette noire. Ce sont le ciel et la mer.

Quelques petits objets mobiles dans l'environnement sont présents : les bateaux qui naviguent sur l'eau sont animés d'une vitesse apparente très faible. Un ballon se déplace dans le ciel. Il est bien contrasté mais son déplacement apparent est très lent compte tenu de son éloignement de la caméra. Comme on le souhaite, les objets mobiles sont restés inclus dans des régions plus importantes. Cela permet de mieux les détecter par la suite en analysant le mouvement des régions dans lesquelles ils sont inclus. La figure 4(G), (H) et (I) illustre les contours des régions superposées aux images initiales.

La séquence d'images présentée figure 4 montre une mosquée comportant six minarets. L'architecture de la mosquée est assez compliquée. Plusieurs plans, situés à des distances différentes de la caméra, peuvent être extraits. Les minarets forment deux par deux des plans parallèles au plan image. Les deux minarets situés à la même distance de la caméra sont regroupés dans une même région et portent la même étiquette. Ce sont les étiquettes représentées en blanc et avec les deux gris les plus clairs. Le corps principal de la mosquée, pouvant être modélisé par un plan incliné dans l'espace 3D, forme une région affectée de la couleur gris très foncé. Le ciel contient peu d'informations sur les gradients spatio-temporels de la fonction intensité. Il correspond à la région apparaissant en noir. Le gris foncé modélise l'arrière plan flou et éloigné correspondant à la ville.

Aucun objet n'est mobile dans cette séquence d'images. Malgré la complexité de la scène, le procédé de l'invention permet d'extraire la structure de l'environnement et les régions de mouvement apparent différent ont pu être dissociées.

A partir de ces deux exemples, on peut noter que les contours de régions correspondent bien à des frontières de mouvement marquées. Les régions, une fois identifiées, ne changent pas d'étiquette au cours du temps.

Le schéma d'un dispositif permettant de mettre en oeuvre le procédé de l'invention est représenté sur la figure 6.

Le premier module 20 est un système d'acquisition de séquences d'images, soit une caméra. Le capteur utilisé peut être indifféremment une caméra vidéo, une caméra CCD, une caméra infrarouge, ou tout autre capteur d'imagerie.

Le deuxième module 21 sert d'intermédiaire entre le système d'acquisition et le procédé de l'invention. L'intervalle temporel du signal vidéo utile pour effectuer le traitement à un instant donné est numérisé et stocké en mémoire.

Le troisième module 22 représente une station de travail ou tout autre processeur programmable où est implanté le module de structuration d'une scène. Il demande en entrée une séquence d'images numérisée.

Le quatrième module 23 correspond aussi à une station de travail ou à un processeur programmable. C'est un module de détection de mouvement utilisant à la fois les résultats du module de structuration d'une scène et la séquence d'images numérisée. Ce module est conçu en adaptant et en améliorant l'algorithme présenté dans la référence [3].

Les deux derniers modules 24 et 25 sont des visualisations des partitions obtenues à l'aide du procédé de structuration d'une scène, ou des cartes de détection obtenues à l'aide du procédé de structuration d'une scène, ou des cartes de détection provenant de la détection de mouvement. Ils consistent en un tube cathodique, un écran de cristaux liquides ou toute forme de visualisation d'images.

Après la boîte de détection le dispositif peut comporter un module supplémentaire apte à réaliser un traitement par exemple de reconnaissance de forme et/ou d'identification d'objets et/ou de suivi de cible.

ANNEXE

ARTICLE REFERENCE [11]

On souhaite prendre en compte les discontinuités du mouvement de façon à préserver les frontières de mouvement. Or, il existe deux types de discontinuités : les discontinuités avec occlusion et les discontinuités sans occlusion. Ces deux types de discontinuités doivent être distingués dans la mesure du possible. Pour calculer le déplacement apparent, deux possibilités sont envisageables, soit "vers l'avant" (entre $I_{t-1}$ et $I_t$), soit "vers l'arrière" (entre $I_t$ et $I_{t-1}$). A priori, ces deux possibilités semblent équivalentes, mais elles ne le sont pas au niveau des contours d'occlusion. Pour tous les autres points, elles sont équivalentes et on a :

$$\vec{w}_a(x,y) = -\vec{w}_b(x-u_a, y-v_a)$$

$$\vec{w}_b(x,y) = -\vec{w}_a(x-u_b, y-v_b)$$

avec $\vec{v}_a = (u_a, v_a)$ et $\vec{v}_b = (u_b, v_b)$, l'indice a représentant le déplacement vers l'avant et l'indice b vers l'arrière.

La probabilité de présence d'une frontière de mouvement peut être exprimée par les relations suivantes :

$$\vec{C}_a(x,y) = \vec{w}_a(x,y) - \vec{w}_b(x-u_a, y-v_a)$$

$$\vec{C}_b(x,y) = \vec{w}_b(x,y) - \vec{w}_a(x-u_b, y-v_b)$$

Ces vecteurs peuvent être utilisés pour définir une mesure de cohérence notée c. Pour réduire sa dépendance envers $\vec{C}$, c doit être normalisé et prend ses valeurs entre 0 et 1. Il est probable que les valeurs de $\vec{C}$ soient dispersées le long de la ligne de discontinuité, c'est pourquoi un lissage peut être envisagé. Le fait de modifier le coefficient de diffusion au cours du processus itératif d'estimation du champ des déplacements permet de mieux contrôler les zones correspondant aux discontinuités. Le rôle le plus important de c est de s'assurer que le lissage est bien stoppé au niveau des discontinuités. Il est possible que certaines vitesses estimées soient incohérentes même si elles ne correspondent pas à un contour de discontinuité. Ces estimations temporairement incohérentes ne doivent pas altérer la solution finale.

Le vecteur $\vec{C}$ étant initialement estimé à partir de la carte des vitesses initiales, puis remis à jour après chaque itération du processus, on peut déterminer la mesure de confiance c en minimisant la fonctionnelle suivante (équation (18)) construite par analogie avec la fonctionnelle régissant la propagation d'un flux de chaleur dans un matériau utilisée en thermique. Le coefficient $\rho$ est le coefficient de diffusion.

$$V_{\vec{c}}(c) = \int \left( \alpha c^2 \left\| \bar{C} \right\| + \frac{\rho}{2} \left\| \vec{\nabla}_c \right\|^2 + \frac{(1-c)^2}{2\rho} \right) dx \, dy \qquad (18)$$

Cette fonction de coût force c à être lisse et proche de 1 sauf aux endroits où $\vec{C}$ est nettement différent de 0. Si la fonctionnelle $V\vec{c}(c)$ est convexe, elle peut être minimisée en résolvant de façon itérative l'équation de diffusion :

$$\frac{\partial c}{\partial t} = \rho \nabla^2 c + \frac{1-c}{\rho} - 2\alpha c \|\vec{C}\| \qquad (19)$$

Cette équation différentielle est couplée au système d'équations (20) de façon à prendre en compte les occlusions en empêchant la propagation de l'information (ou le lissage) aux endroits où c est proche de 0. Le système d'équation introduit par Horn et Schunck (référence [10]) et permettant d'estimer un champ de déplacement sans prise en compte des occlusions est le suivant :

$$\begin{cases} \dfrac{\partial u}{\partial t} = \nabla^2 u - \lambda I_x \left( I_x . u + I_y . v + I_t \right) \\[2mm] \dfrac{\partial v}{\partial t} = \nabla^2 v - \lambda I_y \left( I_x . u + I_y . v + I_t \right) \end{cases} \qquad (20)$$

On va coupler les différentes équations différentielles dans le but d'utiliser la valeur de c pour permettre au champ des vitesses de se propager lorsque c est proche de 1 et pour stopper cette propagation lorsque c est proche de 0. Cela conduit à résoudre un système non linéaire de six équations à six inconnues. Les quatre premières équations décrivent la contrainte du mouvement apparent tandis que les deux dernières traduisent la cohérence du système.

$$\begin{cases}
\dfrac{\partial u_a}{\partial t} &= div\!\left(c_a\vec{\nabla}u_a\right) - \lambda I_a x\!\left(I_{ax}.u_a + I_a y.v_a + I_a t\right) \\[2ex]
\dfrac{\partial v_a}{\partial t} &= div\!\left(c_a\vec{\nabla}v_a\right) - \lambda I_a y\!\left(I_{ax}.u_a + I_a y.v_a + I_a t\right) \\[2ex]
\dfrac{\partial u_b}{\partial t} &= div\!\left(c_b\vec{\nabla}u_b\right) - \lambda I_b x\!\left(I_{bx}.u_b + I_b y.v_b + I_b t\right) \\[2ex]
\dfrac{\partial v_b}{\partial t} &= div\!\left(c_b\vec{\nabla}u_b\right) - \lambda I_b y\!\left(I_{bx}.u_b + I_b y.v_b + I_b t\right) \\[2ex]
\dfrac{\partial c_a}{\partial t} &= \rho\nabla^2 c_a + \dfrac{1-c_a}{\rho} - 2\alpha c_a\left\|\vec{C}_a\!\left(u_a,v_a,u_b,v_b\right)\right\| \\[2ex]
\dfrac{\partial c_b}{\partial t} &= \rho\nabla^2 c_b + \dfrac{1-c_b}{\rho} - 2\alpha c_b\left\|\vec{C}_b\!\left(u_a,v_a,u_b,v_b\right)\right\|
\end{cases} \tag{21}$$

Les valeurs des coefficients que l'on a utilisés en pratique sont :

$$\alpha = 5{,}0 \qquad \rho = 0{,}5 \qquad \lambda = 0{,}0001$$

REFERENCES

[1] "Non Supervised Segmentation Using Multi-Level Markov Random Fields" de Robert Azencott et Christine Graffigne, (Actes 11th International Conference on Pattern Recognition, La Hague, pages 201-204, septembre 1992)

[2] "Motion Segmentation and Qualitative Dynamic Scene Analysis From An Image Sequence" de Patrick Bouthemy et Edouard François (International Journal Of Computer Vision, 10(2) : 157-182, 1993)

[3] "Detection Of Small And Slow Moving Objects In An Image Sequence Observed By A Mobile Camera" de Christine Hennebert, Véronique Rebuffel et Patrick Bouthemy (Actes 9th Scandinavian Conference On Image Analysis, Volume 1, pages 155-162, juin 1995)

[4] "Detecting And Tracking Multiple Moving Objects Using Temporal Integration" de Michel Irani, Benny Rousso et Shmuel Peleg (Actes 2nd European Conference On Computer Vision, Santa Margherita Ligure, pages 282-287, mai 1992)

[5] "Region-Based Tracking Using Affine Motion Models In Long Image Sequences"de François Meyer et Patrick Bouthemy (CVGIP : Image Understanding, 60(2):119-140, septembre 1994)

[6] "Estimation, détection et segmentation du mouvement : une approche robuste et markovienne" de Jean-Marc Odobez (Doctorat, Université de Rennes I, décembre 1994)

[7] "Détection Of Multiple Moving Objects Using Multiscale mrf With Camera Motion Compensation" de Jean-marc Odobez et Patrick Bouthemy (Actes 1st, IEEE Conférence On Image Processing, ICIP'94, Austin, pages 257-261, novembre 1994)

[8] "Robust Multiresolution Estimation Of Parametric Motion Models In Complex Image Sequences" de Jean-Marc Odobez et Patrick Bouthemy (Actes 7th European Conference On Signal Processing, EUSIPCO'94, Edimbourg, pages 411-414, septembre 1994)

[9] "Spatio-Temporal Segmentation Of Video Data" de Q. Wang et Edward H. Adelson (Actes SPIE : Image And Video Processing II, volume 2182, février 1994)

[10] "Determining Optical Flow" de Berthold K.P. Horn et Brian G. Schunck (Artificial Intelligence, 17:185-203, 1981)

[11] "Segmentation and Image Enhancement using Coupled Anisotropic Diffusion Equations" de E.J. Pauwels, M. Proesmans, L.J. Van Gool, T. Moons et A. Ooster-Linck (Actes SPIE, volume 2094, pages 836-847, 1993)

[12] "Depth-From-Motion Estimation Based On Multiscale Analysis Of Motion Constraint Equation Validity" de Jean-Luc Sune, Véronique Rebuffel et Sami (Actes ICIP, Washington, page à paraître, Octobre 1995)

**Revendications**

1. Procédé de structuration d'une scène au sens du mouvement apparent et de la profondeur, dans lequel un objet de petite taille apparente se déplace à une faible vitesse apparente, **caractérisé en ce que** l'on utilise un procédé multimodèle comportant deux niveaux de modèles, le premier niveau de modèle concernant l'agglomération locale des pixels, le second l'agglomération globale des pixels assemblés en régions et que l'on traite différemment les zones de l'image homogènes en niveau de gris et les zones texturées en niveau de gris.

2. Procédé selon la revendication 1, **caractérisé en ce qu'**il comporte les étapes suivantes :

   - initialisation par obtention d'une première image résultat à partir d'un gradient d'intensité spatio-temporel calculé entre un instant t=1 et un instant t=2 et d'un modèle de champ de vitesse ;
   - obtention à l'instant t d'une partition de l'instant t+1 la plus proche possible de ce qu'on suppose obtenir à l'instant t+1 ;
   - distinction des plans de mouvements apparents différents à partir de deux images consécutives en fonction des images résultats précédemment obtenues ;
   - pour les instants suivants réitération des deux étapes précédentes.

3. Procédé selon la revendication 1, **caractérisé en ce qu'**à la seconde étape, la partition construite de l'instant t+1, à partir de l'instant t comprend les phases suivantes :

   • calcul des paramètres du mouvement de chaque région à partir de l'image de partition à l'instant t et de l'image à l'instant t-1 via les gradients,
   • reconstruction du champ des vitesses à l'instant t,
   • application du champ des vitesses à l'image de partition à l'instant t pour obtenir une partition de t+1.

4. Procédé selon la revendication 1, **caractérisé en ce que**, à la troisième étape, on réalise les phases suivantes :

   • agglomération locale réalisée par une attribution pour chaque pixel de l'image à l'instant t d'une étiquette de région en fonction des caractéristiques du pixel analysé et des étiquettes de ses voisins,
   • agglomération globale réalisée par le regroupement des pixels étiquetés en zones connexes cohérentes spatialement et temporellement, le résultat de l'agglomération globale étant la distinction des différents plans à l'instant t,
   • obtention à l'instant t d'une distinction entre les plans lorsque l'agglomération locale et l'agglomération globale ont convergé.

5. Procédé selon la revendication 1, **caractérisé en ce que** la première étape prend en compte les deux premières images de la séquence et comporte les phases suivantes :

   - extraction des régions homogènes en niveaux de gris ;
   - étiquetage des pixels composant les régions homogènes en niveau de gris ;
   - estimation des paramètres d'un mouvement dominant en utilisant les pixels non encore étiquetés à l'aide d'un procédé d'estimation ;
   - extraction de l'ensemble de pixels répondant aux paramètres de la phase précédente ;

- étiquetage des pixels de cet ensemble ;
- bouclage à la phase d'estimation des paramètres jusqu'à ce que les paramètres du mouvement estimé ne correspondent plus à un mouvement dominant ;
- analyse de l'histogramme des vitesses des pixels non encore étiquetés, chaque mode ou pic de l'histogramme correspondant à une nouvelle région, les pixels constituant ces nouvelles régions se trouvant affectées d'une étiquette ;
- obtention d'une partition correspondant à l'ensemble des étiquettes ;
- localisation des ensembles de pixels de même étiquette formant des zones connexes inférieures à une taille prédéfinie ;
- étiquetage de ces zones connexes de l'étiquette de la région qui les entoure ;
- obtention de la première image résultat à l'instant t=1.

6. Procédé selon la revendication 1, **caractérisé en ce qu'**on utilise un procédé multimodèle pour réaliser la seconde étape.

7. Procédé selon la revendication 4, **caractérisé en ce que**, pendant la troisième étape, l'agglomération locale traite une seule image à l'instant t et comprend les phases suivantes :

- calcul des paramètres du mouvement pour chaque région sur l'image de partition servant à initialiser l'instant t ;
- calcul des gradients d'intensité spatiaux et temporels sur l'image de l'instant t et l'image de partition de t-1 ;
- construction des termes de la fonction d'énergie en utilisant les informations obtenues aux deux phases précédentes et, par un procédé de régularisation, application de la fonction d'énergie à l'image qui sert à initialiser l'instant t puis aux images obtenues après chaque itération jusqu'à convergence du procédé de régularisation, le but étant de minimiser la fonction d'énergie globale calculée sur toute l'image.

8. Procédé selon la revendication 7, **caractérisé en ce que** la fonction d'énergie est construite pour favoriser le choix de l'étiquette qui semble le mieux convenir à chaque pixel en fonction des caractéristiques du pixel déterminées à partir des paramètres du mouvement et des gradients d'intensité, et des étiquettes de pixels voisins du pixel considéré.

9. Procédé selon la revendication 4, **caractérisé en ce que** pendant la troisième étape, dans la phase d'agglomération globale, on a :

- élimination de zones inférieures à une taille préalablement définie ;
- regroupement des zones de pixels dont les paramètres de mouvement sont proches de façon à constituer une seule région de même étiquette à l'instant t ;
- création de nouvelles régions si nécessaire.

10. Procédé selon la revendication 4, **caractérisé en ce qu'**on utilise le formalisme des champs de Markov pour réaliser la phase d'agglomération locale et/ou pour réaliser la phase de l'agglomération globale.

11. Procédé selon la revendication 1, **caractérisé en ce que** l'obtention de la première image se déroule en deux étapes :

- la première consiste à extraire les régions peu denses en information spatiale et les régions correspondant à des surfaces planes dont le mouvement apparent correspond exactement aux paramètres estimés du mouvement dominant ;
- la deuxième étape consiste à extraire les plans suffisamment texturés situés à des profondeurs différentes, cette étape débutant lorsqu'aucun mouvement dominant ne peut plus être extrait dans la partie de l'image restant à analyser.

12. Procédé selon la revendication 11, **caractérisé en ce que** la première étape consiste à extraire les régions uniformes en intensité, ces régions étant composées d'un ensemble de pixels pour lesquels les gradients spatiaux et temporels sont nuls pour au moins 95 % des points présents dans leur voisinage, une étiquette étant affectée à ces régions, les régions, dont le mouvement apparent correspond au modèle de mouvement estimé à partir des pixels non étiquetés et à étiqueter, étant alors extraites et affectées d'une étiquette qui leur est propre, et **en ce que**, lorsqu'aucun mouvement dominant ne peut plus être extrait, la seconde étape débute, celle-ci ayant pour but de distinguer les régions correspondant aux différents plans constituant la scène.

**13.** Procédé selon la revendication 11, **caractérisé en ce qu'**il comporte une étape préliminaire qui consiste à estimer le champ des vitesses.

**14.** Procédé selon la revendication 1, **caractérisé en ce que** les paramètres du mouvement sont calculés à l'aide d'un estimateur robuste, et **en ce que** l'on mène le calcul des paramètres du mouvement pour chaque région en monorésolution, et **en ce qu'**on calcule pour chaque région $R_i$ le vecteur vitesse normal moyen :

$$\overline{w}_n^{(i)} = \begin{pmatrix} \overline{u}_n^{(i)} \\ \overline{v}_n^{(i)} \end{pmatrix}$$

les paramètres à estimer étant alors initialisés de la façon suivante :

$$\theta_i^{init} = \left( \overline{u}_n^{(i)} 0 0 \overline{v}_n^{(i)} 0 0 \right)$$

tous les pixels de la région $R_i$ analysée contribuant à estimer les paramètres du mouvement en minimisant la fonction d'énergie

$$E^2 = \int_{p \in R_i} \frac{1}{2} bj [\theta_i . B(p) . \overrightarrow{\nabla} I(p) + I_t(p)]^2 \, dx \, dy$$

par la méthodes des moindres carrés pondérés.

**15.** Procédé selon la revendication 1, **caractérisé en ce que** les paramètres du mouvement de chaque région sont calculés à l'aide d'un estimateur robuste en minimisant la fonction d'énergie suivante :

$$E^2 = \int_{p \in R_i} \frac{1}{2} b_j \left( \left( u_{\hat{\theta}}(q) - u(q) \right)^2 + \left( v_{\hat{\theta}}(q) - v(q) \right)^2 \right) dx.dy$$

où les $b_j$ sont les poids de l'estimateur robuste et (u,v) correspond au vecteur vitesse au point p extrait de la carte du champ des déplacements estimé.

**Patentansprüche**

**1.** Verfahren zur Szenenstrukturierung nach einer scheinbaren Bewegungsrichtung und der Tiefe, in dem ein Objekt von scheinbar kleiner Größe sich mit einer scheinbar kleinen Geschwindigkeit bewegt, **dadurch gekennzeichnet, dass** man ein Multimodell-Verfahren benutzt, das zwei Modellniveaus umfasst, nämlich das die lokale Verdichtung oder Anhäufung der Pixel betreffende erste Modellniveau und das die globale Anhäufung oder Verdichtung der in Bereichen versammelten Pixel betreffende zweite Niveau, und dass man die homogenen Graupegelzonen des Bildes und die texturierten Graupegelzonen unterschiedlich verarbeitet.

**2.** Verfahren nach Anspruch 1, **dadurch gekennzeichnet, dass** es die folgenden Schritte umfasst:

- Initialisierung durch Herstellung eines ersten Resultat-Bildes aufgrund eines räumlichzeitlichen Intensitätsgradienten, berechnet zwischen einem Zeitpunkt t=1 und einem Zeitpunkt t=2, und eines Geschwindigkeitsfeldmodells;
- Herstellung - zum Zeitpunkt t - einer Einteilung des nächstmöglichen Zeitpunkts t+1 gemäß dem, was man zum Zeitpunkt t+1 zu erhalten erwartet;

- Unterscheidung der scheinbar unterschiedlichen Bewegungsebenen aufgrund von zwei aufeinanderfolgenden Bildem in Abhängigkeit von den vorhergehend hergestellten Resultat-Bildem;
- für die nachfolgenden Zeitpunkte Wiederholung der beiden vorhergehenden Schritte.

3. Verfahren nach Anspruch 1, **dadurch gekennzeichnet, dass** die in dem zweiten Schritt konstruierte bzw. gebildete Teilung des Zeitpunkts t+1 ab dem Zeitpunkt t folgende Phasen umfasst:

- Berechnung der Bewegungsparameter jedes Bereichs aufgrund des Einteilungsbilds zum Zeitpunkt t und des Bilds zum Zeitpunkt t-1 über die Gradienten,
- Rekonstruktion bzw. Neubildung des Geschwindigkeitsfelds zum Zeitpunkt t,
- Anwendung des Geschwindigkeitsfelds auf das Einteilungsbild zum Zeitpunkt t, um eine Einteilung t+1 herzustellen.

4. Verfahren nach Anspruch 1, **dadurch gekennzeichnet, dass** im dritten Schritt folgende Phasen realisiert werden:

- lokale Verdichtung oder Anhäufung, realisiert indem jedem Bildpixel zum Zeitpunkt t ein Bereichsetikett zugeteilt wird, in Abhängigkeit von den Charakteristika des analysierten Pixels und den Etiketten seiner Nachbarn,
- globale Anhäufung oder Verdichtung, realisiert durch die Zusammenfassung der Etikettenpixel in räumlich und zeitlich kohärenten zusammenhängenden Zonen, wobei das Resultat der globalen Verdichtung die Unterscheidung der verschiedenen Ebenen zum Zeitpunkt t ist,
- Herstellung zum Zeitpunkt t einer Unterscheidung zwischen den Ebenen, wenn die lokale Verdichtung und die globale Verdichtung konvergieren.

5. Verfahren nach Anspruch 1, **dadurch gekennzeichnet, dass** der erste Schritt die beiden ersten Bilder der Sequenz berücksichtigt und die folgenden Phasen umfasst:

- Extraktion der homogenen Graupegelbereiche;
- Etikettierung der die homogenen Graupegelbereiche bildenden Pixel;
- Schätzung der Parameter einer dominanten Bewegung mit Hilfe eines Schätzungsverfahrens, wobei man die noch nicht etikettierten Pixel benutzt;
- Extraktion aller Pixel, die den Parametem der vorhergehenden Phase entsprechen;
- Etikettierung der Pixel dieser Gruppe bzw. Menge;
- Schleifung mit der Parameterschätzungsphase, bis die Parameter der geschätzten Bewegung nicht mehr einer dominanten Bewegung entsprechen;
- Analyse des Histogramms der Geschwindigkeiten der noch nicht etikettierten Pixel, wobei jeder Modus oder Peak des Histogramms einem neuen Bereich entspricht und die diese neuen Bereiche bildenden Pixel mit einem Etikett versehen werden;
- Herstellung einer der Gesamtheit der Etiketten entsprechenden Einteilung;
- Lokalisierung der Pixelgruppen bzw. -mengen desselben Etiketts, die zusammenhängende Zonen bilden, die kleiner sind als eine vorher festgelegte Größe;
- Etikettierung dieser zusammenhängenden Zonen mit dem Etikett des Bereichs, der sie umgibt;
- Herstellung des ersten Resultat-Bildes zum Zeitpunkt t=1.

6. Verfahren nach Anspruch 1, **dadurch gekennzeichnet, dass** man ein Multimodell-Verfahren anwendet, um den zweiten Schritt zu realisieren.

7. Verfahren nach Anspruch 4, **dadurch gekennzeichnet, dass** während des dritten Schritts die lokale Verdichtung ein einziges Bild zum Zeitpunkt t behandelt bzw. verarbeitet und die folgenden Phasen umfasst:

- Berechnung der Parameter der Bewegung für jeden Bereich in dem Einteilungsbild, was dazu dient, den Zeitpunkt t zu initialisieren;
- Berechnung der räumlichen und zeitlichen Intensitätsgradienten in dem Bild des Zeitpunkts t und dem Einteilungsbild von t-1;
- Bildung der Terme der Energiefunktion, indem die in den beiden vorhergehenden Phasen erhaltenen Informationen benutzt werden und, durch ein Regulierungsverfahren, Anwendung der Energiefunktion auf das Bild, das dazu dient, den Zeitpunkt t zu initialisieren, und dann auf die nach jeder Wiederholung erhaltenen Bilder, bis zur Konvergenz des Regulierungsverfahrens, wobei der Zweck darin besteht, die über das ganze Bild berechnete Gesamtenergiefunktion zu minimieren.

8. Verfahren nach Anspruch 7, **dadurch gekennzeichnet, dass** die Energiefunktion gebildet wird, um die Wahl des Etiketts zu begünstigen, das am besten zu jedem Pixel und zu den dem betrachteten Pixel benachbarten Pixeln passt, in Abhängigkeit von den Pixel-Charakteristika, bestimmt aufgrund der Bewegungsparameter und der Intensitätsgradienten.

9. Verfahren nach Anspruch 4, **dadurch gekennzeichnet, dass** man während des dritten Schritts, in der Phase globaler Verdichtung bzw. Anhäufung, hat:

   - Eliminierung von Zonen, die kleiner sind als eine vorher definierte Größe;
   - Zusammenfassung der Pixelzonen, deren Bewegungsparameter so ähnlich sind, dass sie zum Zeitpunkt t einen einzigen Bereich mit einem selben Etikett bilden;
   - Schaffung neuer Bereiche, wenn nötig.

10. Verfahren nach Anspruch 4, **dadurch gekennzeichnet, dass** man den Formalismus der Markov-Felder benutzt, um die lokale Verdichtungsphase zu realisieren und/oder die globale Verdichtungsphase zu realisieren.

11. Verfahren nach Anspruch 1, **dadurch gekennzeichnet, dass** die Herstellung des ersten Bildes in zwei Schritten erfolgt:

   - der erste darin bestehend, die Bereiche zu extrahieren, die nicht sehr dicht an räumlicher Information sind, und die Bereiche, die ebenen Oberflächen entsprechen, deren scheinbare Bewegung genau den geschätzten Parametern der dominanten Bewegung entsprechen;
   - der zweite darin bestehend, die ausreichend texturierten Ebenen zu extrahieren, die sich in verschiedenen Tiefen befinden, wobei dieser Schritt beginnt, wenn in dem Teil des Bildes, der noch analysiert werden muss, keine dominante Bewegung mehr extrahiert werden kann.

12. Verfahren nach Anspruch 11, **dadurch gekennzeichnet, dass** der erste Schritt darin besteht, die Bereiche gleichmäßiger Intensität zu extrahieren, wobei diese Bereiche durch eine Gruppe bzw. Menge von Pixeln gebildet werden, deren räumliche und zeitliche Gradienten null sind für wenigstens 95 % der in ihrer Umgebung vorhandenen Punkte, wobei diesen Bereichen ein Etikett zugeteilt wird, und die Bereiche, deren scheinbare Bewegung dem aufgrund der nicht-etikettierten oder zu etikettierenden Pixel geschätzten Bewegungsmodell entspricht, werden dann extrahiert und mit einem eigenen Etikett versehen, und dadurch, dass - wenn keine dominante Bewegung mehr extrahiert werden kann, der zweite Schritt beginnt, wobei dieser dann den Zweck hat, die Bereiche zu unterscheiden, die den verschiedenen, die Szene bildenden Ebenen entsprechen.

13. Verfahren nach Anspruch 11, **dadurch gekennzeichnet, dass** es einen vorbereitenden Schritt umfasst, der darin besteht, das Geschwindigkeitsfeld zu schätzen.

14. Verfahren nach Anspruch 1, **dadurch gekennzeichnet, dass** die Bewegungsparameter mit Hilfe einer robusten Schätzfunktion berechnet werden, und dadurch, dass man die Berechnung der Bewegungsparameter für jeden Bereich als Monoauflösung durchführt, und dadurch, dass man für jeden Bereich $R_i$ den normalen mittleren Geschwindigkeitsvektor berechnet:

$$\overrightarrow{w}_n^{(t)} = \begin{pmatrix} \overrightarrow{u}_n^{(t)} \\ \overrightarrow{v}_n^{(t)} \end{pmatrix}$$

wobei die zu schätzenden Parameter dann folgendermaßen initialisiert werden:

$$\theta_l^{init} = \left( \overrightarrow{u}_n^{(t)} 0 0 \overrightarrow{v}_n^{(t)} 0 0 \right)$$

wobei alle Pixel des analysierten Bereichs $R_l$ dazu beitragen, die Bewegungsparameter zu schätzen, indem die Energiefunktion

$$E^2 = \int_{p \in R_i} \frac{1}{2} bj[\theta_i . B(p). \vec{\nabla} I(p) + I_t(p)]^2 \ dx \ dy$$

durch das Kleinst-Fehlerquadrate-Verfahren minimiert wird.

15. Verfahren nach Anspruch 1, **dadurch gekennzeichnet, dass** die Bewegungsparameter jedes Bereichs mit Hilfe einer robusten Schätzfunktion berechnet , werden, indem man die folgende Energiefunktion minimiert:

$$E^2 = \int_{p \in R_i} \frac{1}{2} b_j \left( \left( u_{\hat{\theta}}(q) - u(q) \right)^2 + \left( v_{\hat{\theta}}(q) - v(q) \right)^2 \right) dx.dy$$

wo die $b_j$ die Gewichtungen der robusten Schätzungsfunktion sind und (u,v) dem Geschwindigkeitsvektor im Punkt p entspricht, extrahiert aus der Karte des geschätzten Bewegungsfelds.

## Claims

1. Method of scene structuring in the apparent direction of movement and depth, in which an apparent small object moves at an apparent slow speed, **characterised in that** a multi-model method is used, comprising two levels of model, the first model level concerning the local agglomeration of pixels, and the second level the global agglomeration of pixels grouped into regions and **in that** the homogenous zones of the image on the grey scale are processed differently to the textured zones on the grey scale.

2. Method according to claim 1, **characterised in that** it comprises the following steps:

   - initialisation by obtaining a first result image based on a gradient of spatiotemporal intensity calculated between a time t= 1 and a time t=2 and from a speed field model;
   - obtaining at time t a partition of time t+1 which is as close as one can expect to obtain at time t+1;
   - distinguishing the apparent different movement planes from two consecutive images according to the previously obtained result images;
   - repetition of the two previous steps for the subsequent times.

3. Method according to claim 1, **characterised in that** at the second step the partition made at time t + 1 based on time t comprises the following stages:

   • calculation of the movement parameters of each region based on the partition image at time t and the image at time t-1 via the gradients,
   • reconstruction of the speeds field at time t,
   • application of the speeds field to the partition image at time t to obtain a partition of t + 1.

4. Method according to claim 1, **characterised in that**, at the third step, the following is carried out:

   • local agglomeration achieved by allocating a region label to each pixel of the image at time t according to the characteristics of the analysed pixel and its adjacent labels,
   • global agglomeration achieved by regrouping the labelled pixels into spatially and temporally coherent related zones, the result of global agglomeration being the difference of different planes at time t,
   • obtaining a difference between the planes at time t when local and global agglomeration have converged.

5. Method according to claim 1, **characterised in that** the first step takes into account the first two images of the sequence and includes the following :

   - extraction of the homogenous regions on the grey scale;
   - labelling of the pixels forming the homogenous regions on the grey scale;
   - estimation of the parameters of a dominant movement using the pixels which have not yet been labelled with the aid of an estimation method;
   - extraction of the group of pixels responding to the parameters of the preceding stage;

- labelling of the pixels in this group;
- completion of the step estimating the parameters until the estimated movement parameters no longer correspond to a dominant movement;
- analysis of the histogram of the speeds of the pixels not yet labelled, each mode or peak of the histogram corresponding to a new region, with the pixels forming these new regions being allocated a label;
- obtaining a partition corresponding to the set of labels;
- localisation of the groups of pixels with the same label forming related zones which are smaller than a predetermined size;
- labelling of these related zones with a label of the region surrounding them;
- obtaining the first result image at time t = 1

6. Method according to claim 1, **characterised in that** a multi-model process is used to achieve the second step.

7. Method according to claim 4, **characterised in that**, during the third step, local agglomeration processes a single image at time t and comprises the following:

- calculation of the movement parameters of each region on the partition image used for initialising at time t ;
- calculation of the spatial and temporal gradients of intensity on the image at time t and the partition image of t-1;
- the construction of energy function terms using information obtained from the two preceding stages and, by a stabilising process, the application of the energy function onto the image used for initialising at time t then onto the images obtained after each iteration until the stabilising process has converged, the aim being to minimise the global energy function calculated on the whole image.

8. Method according to claim 7, **characterised in that** the energy function is constructed to favour the choice of label which seems best suited to each pixel according to its determined characteristics based on the movement parameters and the gradients of intensity, and on the labels of the adjacent pixels of the pixel in question.

9. Method according to claim 4, **characterised in that**, during the third step, in global agglomeration, one has:

- the elimination of zones smaller than a previously defined size;
- the regrouping of zones of pixels whose movement parameters are close in such a way as to form a single region of the same label at time t;
- the creation of new regions, if necessary.

10. Method according to claim 4, **characterised in that** the formalism of Markov fields is used to achieve local agglomeration and/or to achieve global agglomeration.

11. Method according to claim 1, **characterised in that** the first image is obtained in two stages :

- the first stage consists of extracting the regions which are slightly dense in spatial information and the regions corresponding to the plane surfaces whose apparent movement corresponds exactly to the estimated parameters of the dominant movement;
- the second stage consists of extracting the sufficiently textured planes situated at different depths, this stage commencing when a dominant movement can no longer be extracted from the part of the image still to be analysed.

12. Method according to claim 11, **characterised in that** the first stage consists of extracting regions of the same intensity, these regions being composed of a group of pixels whose spatial and temporal gradients are nil for at least 95% of the points in their vicinity, with a label being allocated to these regions, the regions, whose apparent movement corresponds to the movement model estimated from the non-labelled pixels and those to be labelled, then being extracted and allocated their own label, and **in that** when a dominant movement can no longer be extracted, the second stage commences, the aim of which is to distinguish the regions corresponding to the different planes forming the scene.

13. Method according to claim 11, **characterised in that** it comprises a preliminary stage which consists of estimating the speeds field.

14. Method according to claim 1, **characterised in that** the movement parameters are calculated with the aid of a robust estimator and **in that** the calculation for the movement parameters is carried out for each region in monoresolution, and **in that** the average normal speed vector is calculated for each region $R_i$:

$$\overline{w}_n^{(i)} = \begin{pmatrix} \overline{u}_n^{(i)} \\ \overline{v}_n^{(i)} \end{pmatrix}$$

with the parameters to be estimated then being initialized as follows :

$$\theta_i^{init} = (\overline{u}_n^{(i)} 0 0 \overline{v}_n^{(i)} 0 0)$$

and all the pixels of the analysed region $R_i$ contributing to the estimation of the movement parameters while minimising the energy function

$$E^2 = \int_{p \in R_i} \frac{1}{2} b_j \left[ \theta_i . B(p).\overline{\nabla}I(p) + I_t(p) \right]^2 dxdy$$

by the weighted least-squares method.

15. Method according to claim 1, **characterised in that** the movement parameters of each region are calculated with the help of a robust estimator, while minimising the following energy function:

$$E^2 = \int_{p \in R_i} \frac{1}{2} b_j \left( \left( u_{\hat{\theta}}(q) - u(q) \right)^2 + \left( v_{\hat{\theta}}(q) - v(q) \right)^2 \right) dx.dy$$

where $b_j$ is the weight of the robust estimator and (u,v) corresponds to the speed vector at point p extracted from the map of the estimated field of displacement.

SEQUENCE D'IMAGES INITIALE

OBTENTION DE LA PARTITION INITIALE — *10*

PREDICTION
INITIALISATION
DU PROCESSUS DE RELAXATION
A L'INSTANT SUIVANT — *11*

APPROCHE MULTIMODELE

AGGLOMERATION
LOCALE

N ITERATIONS MAXIMUM

*12*

AGGLOMERATION
GLOBALE

*13*

CONVERGENCE
AGGLOMERATION LOCALE
ATTEINTE ?

NON

OUI

PARTITION FINALE OBTENUE A L'INSTANT t

FIG. 1

I(t-1)    I(t)    CARTES DES POINTS VALIDES    CARTE DES VITESSES INITIALE

NIVEAU L    PROJECTION    FUSION

NIVEAU 0

(a)    (b)    (c)    (d)    (e)

FIG. 2

EP 0 774 735 B1

RECHERCHE DES VOISINS DE $S_2$
A L'INTERIEUR D'UN CERCLE DE DIAMETRE $\delta$

$a_3$

$\leftarrow \delta \rightarrow$

$\times S_4$

$S_2 \times$  $S_3 \times$

$S_8 \times$

$\times S_9$

$S_1 \times$

$S_5 \times$

$\times S_7$

$S_6 \times$   $\times S_{10}$

$a_0$

FIG. 3A

PILE

| |
|---|
| $S_2$ |
| $S_5$ |
| $S_1$ |
| $S_3$ |
| $S_6$ |
| $S_7$ |

FIG. 3B

20 CAMERA → 21 NUMERISATION → 22 MODULE DE STRUCTURATION D'UNE SCENE → 24 VISUALISATION

23 MODULE DE DETECTION DE MOUVEMENT → 25 VISUALISATION

FIG. 6

t=1  t=2  t=10

_A_  _B_  _C_

_D_  _E_  _F_

_G_  _H_  _I_

FIG. 4

t=1 t=2 t=10

_A_ _B_ _C_

_D_ _E_ _F_

_G_ _H_ _I_

FIG. 5